# FASCICULE DE BREVET EUROPEEN

(11) **EP 1 995 502 B1**
(45) Date de publication et mention de la délivrance du brevet: **04.08.2010**
(21) Numéro de dépôt: 08156661.4
(22) Date de dépôt: 21.05.2008
(51) Int. Cl.: F16K 7/12, F16K 31/126, A47C 27/10

(54) **Vanne à commande pneumatique et réserve d'énergie et dispositif de support**
Pneumatisches Regelventil und Energiespeicher und Stützvorrichtung
Pneumatic control valve and energy reserve and support device

(30) Priorité: 25.05.2007 FR 0703742
(43) Date de publication de la demande: 26.11.2008
(73) Titulaire: HILL-ROM INDUSTRIES S.A., 34100 Montpellier (FR)
(72) Inventeur: Viard, Jean-Louis, 34790 Grabels (FR)
(74) Mandataire: Domange, Maxime

(56) Documents cités:
- CH-A5- 686 051
- FR-A- 1 375 258
- US-A- 3 633 605
- US-A- 5 529 280
- US-A1- 2005 047 923

## Description

La présente invention concerne des dispositifs de commande pneumatique comportant des vannes d'alimentation/évacuation en air, utiles pour alimenter en air ou vider les compartiments gonflés d'air d'un dispositif de support, en particulier du corps d'un individu, de type matelas, comprenant une pluralité de compartiments aptes à être gonflés d'un fluide, en particulier gonflé d'air comprimé.

En particulier, ces compartiments sont en forme de boudins, chaque boudin s'étendant transversalement par rapport à la direction longitudinale du matelas et les différents boudins étant disposés côte à côte dans la direction longitudinale du matelas.

Chaque compartiment comprend en général un orifice d'alimentation de fluide et un orifice d'évacuation de fluide.

Pour remplir/gonfler un compartiment, on ouvre une première vanne typiquement une électrovanne commandant l'alimentation à travers ledit orifice d'alimentation, puis on injecte de l'air sous pression, puis on la ferme quand la pression nécessaire est atteinte tout en maintenant fermée une deuxième électrovanne commandant l'évacuation de fluide à partir dudit orifice d'évacuation. Et, inversement, pour vider ou dégonfler un compartiment, pour ajuster la pression à l'intérieur du compartiment, on maintient fermée ladite première électrovanne commandant l'orifice d'alimentation et on ouvre la deuxième électrovanne commandant l'évacuation à partir de l'orifice d'évacuation.

Des matelas de ce type sont utilisés en milieux médicalisés car ils permettent d'assurer une meilleure répartition du fluide à l'intérieur du matelas. Et, surtout, ils permettent, en fonction du nombre d'électrovannes mises en oeuvre, de contrôler individuellement la pression et donc le remplissage des compartiments dans différentes zones du matelas.

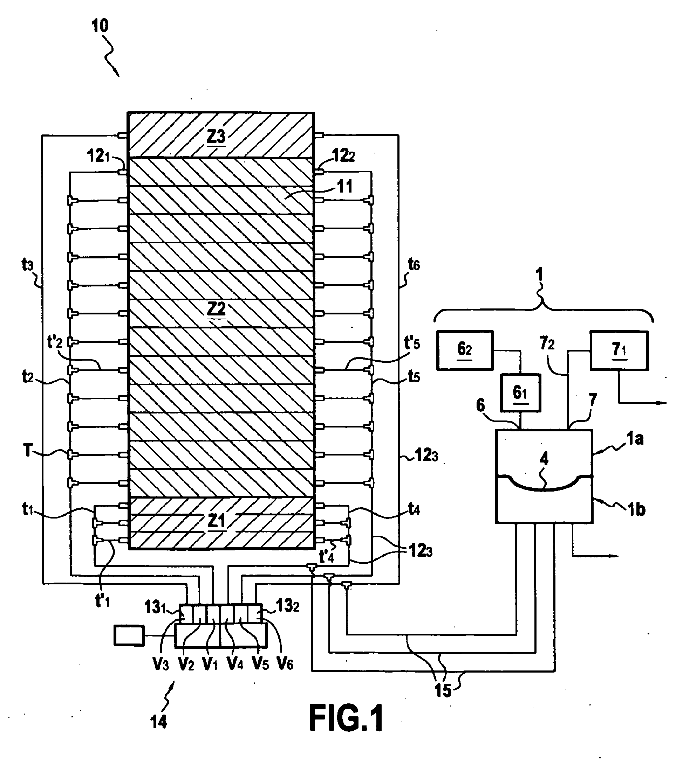

A titre illustratif sur la figure 1, on a représenté schématiquement un matelas comprenant seize compartiments ou boudins répartis en trois zones :
- une première zone Z₃ de la tête aux épaules avec un seul compartiment,
- une deuxième zone Z₂ des épaules jusqu'aux mollets comprenant douze compartiments, et
- une troisième zone Z₁ au niveau des talons comprenant trois compartiments.

En principe, le confort idéal d'un patient, notamment pour éviter la formation d'escarres ou réduire les douleurs localisées en certaines zones d'appui du corps sur le matelas, est obtenu lorsque la pression exercée par les différentes zones du corps sur le matelas (appelée « pression d'interface ») est sensiblement identique pour tous les points de la surface de contact du corps avec le matelas et si, d'autre part, cette surface de contact du corps avec le matelas est la plus élevée possible, ce qui requiert d'adapter l'enfoncement du corps dans les différents compartiments selon les différentes parties du corps.

Pour ce faire, on doit réaliser une répartition de la pression à l'intérieur des compartiments en contrôlant donc leur remplissage/vidange dans les différents compartiments le long de la direction longitudinale du matelas selon certains calculs pré-établis à partir et en fonction des mesures effectuées avec des capteurs dans, sur ou dessous le matelas selon le type de capteurs mis en oeuvre.

Ces capteurs connus de l'homme de l'art peuvent mesurer la pression à l'intérieur des compartiments ou l'enfoncement du corps du patient dans les compartiments donnés du matelas, tel que décrit par exemple dans le brevet européen EP 0 676 158 au nom de la demanderesse.

Les électrovannes proposées sont conçues pour être montées dans des boîtiers notamment sur des distributeurs pneumatiques, plus généralement sur un collecteur/distributeur multiple de type manifold combiné, le cas échéant, à un boîtier de commande électronique permettant de commander l'alimentation et l'évacuation du fluide de façon modulée et contrôlée dans les différentes zones de compartiment du matelas. Les différentes électrovannes d'alimentation sont, en général, alimentées en fluide à partir d'une même source d'alimentation, le cas échéant, une même pompe ou compresseur pour injecter, le cas échéant de l'air ou gaz comprimé, dans les compartiments.

Ces boîtiers techniques de commande et de distribution de fluide de type manifold regroupant les différentes électrovannes sont disposés par exemple au pied du lit et sont donc nécessairement relativement éloignés de certains des compartiments auxquels les électrovannes sont reliées par des tuyaux d'alimentation et tuyaux d'évacuation.

En général, chaque électrovanne est dédiée à l'alimentation, respectivement l'évacuation de plusieurs compartiments afin de limiter le nombre d'électrovannes.

La limitation du nombre d'électrovannes permet aussi de limiter le nombre de tuyaux au départ du manifold et donc l'encombrement généré par ces tuyaux.

Sur la figure 1, on a représenté un manifold comprenant trois électrovannes d'alimentation sur lesquelles sont montés trois tuyaux principaux d'alimentation à partir de chacun desquels des dérivations, par l'intermédiaire de raccords en T de tuyaux secondaires d'alimentation alimentent n compartiments.

Symétriquement, n tuyaux secondaires d'évacuation connectés aux orifices d'évacuation desdits compartiments sont raccordés par l'intermédiaire du raccord en T à trois tuyaux principaux d'évacuation, l'évacuation assure la circulation du fluide jusqu'à trois vannes d'évacuation sur le même manifold.

Plus précisément sur la figure 1, les vannes V₃ et V₆ commandent un seul compartiment d'une première zone de tête par l'intermédiaire d'un premier tuyau principal d'alimentation et, respectivement, un premier tuyau d'évacuation.

Les vannes V₂ et V₅ commandent l'alimentation et, respectivement, l'évacuation de douze compartiments d'une zone médiane s'étendant sur tout le corps depuis les épaules jusqu'aux jambes, les douze compartiments étant alimentés par douze deuxièmes tuyaux secondaires d'alimentation et, respectivement, d'évacuation, eux-mêmes raccordés à un deuxième tuyau principal d'alimentation et un deuxième tuyau principal d'évacuation connectés auxdites vannes correspondantes.

Enfin, les vannes V₁ et V₄ commandent le remplissage de trois compartiments constitués d'une zone de pied à partir d'un troisième tuyau principal d'alimentation et troisième tuyau principal d'évacuation, chaque troisième tuyau principal d'alimentation et respectivement d'évacuation étant raccordé à trois troisièmes tuyaux secondaires d'alimentation et, respectivement, trois tuyaux secondaires d'évacuation.

Il peut arriver que l'on ait besoin de vider, en urgence, totalement l'air contenu dans tous les compartiments d'un matelas thérapeutique, pour faire reposer un patient en détresse cardiaque sur un plan dur, afin de réaliser un massage cardiaque et/ou réaliser une intubation du patient.

Dans ce cas, les électrovannes d'évacuation usuelles du type des vannes V4 à V6 de la figure 1 ne sont pas appropriées car celles-ci sont dimensionnées pour des débits relativement faibles. En effet, du fait que ces électrovannes sont souvent sollicitées pour régler le gonflage du matelas, on cherche à en réduire les nuisances sonores et leurs consommations d'énergie, en réduisant au maximum leur capacité volumique. Ces électrovannes d'évacuation usuelles ne sont donc pas appropriées pour réaliser un vidage complet en urgence, donc rapide, de tous les compartiments d'un matelas simultanément.

Pour réaliser ce type d'opération appelée « CPR » (« Cardio Pulmonary Ressucitation), on utilise des vannes spécifiques dites « CPR ».

Ces vannes dites « CPR » doivent permettre d'évacuer, à grand débit, de l'air à faible pression.

Deux types de vannes CPR sont actuellement utilisés à ce jour:
- des vannes à commande, nécessitant une intervention manuelle directement sur la vanne, et
- des vannes à commande à distance par activation électrique de la vanne.

Les vannes à commande manuelle de type « CPR » ne sont pas aisées à manipuler car elles sont d'un accès difficile, encombrées par les draps, les couvertures et les barrières de sécurité du lit, ce qui induit une perte de temps importante lors de leur manipulation.

S'agissant des vannes de commande à distance par activation électrique, un problème se pose lorsqu'il y a une panne électrique dans la chambre et que l'on veut dégonfler le matelas pour réaliser un massage cardiaque en urgence et/ou lorsque l'on déplace le patient sur son lit entre sa chambre et le bloc opératoire ou un cabinet de radiologie et, que là encore, on veut réaliser le dégonflage du matelas en l'absence d'alimentation électrique. Dans ce dernier cas, il faut prévoir une source d'énergie autonome additionnelle, en cas de coupure de courant accidentelle ou lors du transfert du matelas. La source d'énergie est assurée généralement par une batterie rechargeable qui doit être en parfait état, nécessitant en permanence, un chargeur adéquat.

Cette technique très utilisée est onéreuse, le matériel étant en outre d'un poids important et impliquant en outre un apport calorique important.

Un autre inconvénient tient en ce qu'il est nécessaire de mettre autant de vannes de type « CPR » qu'il y a de zones de compartiments à pressions différentes dans le matelas thérapeutique concerné.

De telles vannes sont déjà connues des documents FR 1375258, US 5529280 et CH 686051.

Le but de la présente invention est de fournir un nouveau type de vanne, utile plus particulièrement à titre de vanne de vidage rapide et total de matelas thérapeutique à compartiment gonflé d'air, notamment vanne dénommée type « CPR », qui soit d'un fonctionnement à la fois aisé, économique et fiable.

En particulier, un but de la présente invention est de fournir une vanne qui puisse commander le vidage d'air de tous les compartiments d'un même matelas thérapeutique, même ceux gonflés à des pressions différentes.

Un autre but de la présente invention est de fournir une vanne de type « CPR » qui ne requiert pas d'alimentation électrique pour être maintenue dans un dit état d'ouverture ou dans un dit état d'obturation.

Un autre but de la présente invention est de fournir une vanne de type « CPR », dont le changement d'état entre l'état d'obturation et l'état d'ouverture puisse être déclenché à distance et sans apport d'énergie extérieure, notamment sans apport d'énergie électrique.

Un autre but de la présente invention est donc de fournir une vanne de type « CPR » qui ne requiert pas d'alimentation électrique pour commander un changement d'état entre un état d'obturation empêchant la circulation d'air à travers la vanne et un état d'ouverture permettant la circulation d'air à travers la vanne.

Pour ce faire, la présente invention fournit une vanne à commande pneumatique et réserve d'énergie, avec au moins un orifice d'admission de gaz et au moins un orifice d'évacuation de gaz par mise à l'air libre, la commande pneumatique permettant de commander soit un état d'obturation de ladite vanne empêchant la circulation de gaz entre lesdits orifice d'admission et orifice d'évacuation, soit un état d'ouverture de ladite vanne permettant la circulation de gaz à travers et entre lesdits orifice d'admission et orifice d'évacuation en position d'ouverture,
- ladite commande pneumatique de changement d'état se faisant par déplacement d'un diaphragme, ledit diaphragme établissant une séparation étanche entre, d'une part, lesdits orifice d'admission et orifice d'évacuation et, d'autre part, une première chambre dite chambre de pressurisation; et
- ledit diaphragme étant apte à se déformer élastiquement entre les deux positions suivantes d'ouverture et d'obturation commandant des états d'ouverture et respectivement d'obturation de ladite vanne :
   - une position d'obturation dans laquelle ladite chambre de pressurisation est pressurisée par injection de gaz, de préférence d'air, le diaphragme étant déformé élastiquement de manière à venir obturer lesdits orifice d'admission et orifice d'évacuation, et
   - une position d'ouverture, dans laquelle ladite chambre de pressurisation est dépressurisée, ledit diaphragme retournant dans sa position de repos dans laquelle le diaphragme sépare ladite première chambre et une deuxième chambre dite chambre de circulation permettant la circulation de gaz à travers et entre lesdits orifice d'admission et orifice d'évacuation à l'intérieur de ladite vanne, la vanne étant caractérisée en ce que ladite chambre de pressurisation comprend un orifice de mise en pression coopérant avec un premier moyen de fermeture/ouverture dudit orifice de mise en pression et un compresseur apte à injecter un gaz, de préférence de l'air, sous pression dans ledit orifice de mise en pression (6), et un orifice de dépressurisation par mise à la pression atmosphérique de ladite première chambre, coopérant avec un deuxième moyen de fermeture/ouverture dudit orifice de dépressurisation;

- le diaphragme étant apte à :
   - rester dans une dite position d'obturation de ladite vanne, sans injection de gaz dans ledit orifice de mise en pression, quand ladite chambre de pressurisation est à une pression supérieure à ladite chambre de circulation et que lesdits premier et deuxième moyens de fermeture/ouverture desdits orifices restent en position fermée, et
   - passer d'une dite position d'obturation à une dite position d'ouverture de ladite vanne et rester dans une dite position d'ouverture de ladite vanne quand ledit deuxième moyen de fermeture/ouverture dudit orifice de dépressurisation est ouvert, et
   - passer d'une dite position d'ouverture à une dite position d'obturation de ladite vanne par fermeture dudit deuxième moyen de fermeture/ouverture de l'orifice de dépressurisation et ouverture dudit premier moyen de fermeture/ouverture dudit orifice de pressurisation, puis injection de gaz dans ledit orifice de pressurisation jusqu'à ce que ladite chambre de pressurisation soit à une pression supérieure à la pression de ladite chambre de circulation.

On comprend que :
- le passage de ladite position d'ouverture à ladite position d'obturation peut se faire par injection de gaz, sans apport d'énergie autre que celle requise éventuellement pour ouvrir lesdits premiers moyens de fermeture/ouverture de l'orifice de pressurisation et pour fermer ledit deuxième moyen de fermeture/ouverture de l'orifice de dépressurisation, et
- la mise sous pression de ladite chambre de pressurisation, suivie de la mise en dit état d'obturation de la vanne, permet de constituer une réserve d'énergie pneumatique qui suffit à maintenir le diaphragme en position d'obturation sans apport d'énergie extérieure, notamment sans apport d'énergie électrique, et
- le passage d'une dite position d'obturation à une dite position d'ouverture peut se faire par libération de cette réserve d'énergie par la seule mise à la pression atmosphérique dudit orifice de dépressurisation, sans apport d'énergie extérieure autre que celle nécessaire éventuellement à l'ouverture dudit deuxième moyen de fermeture/ouverture de l'orifice de dépressurisation, étant entendu que le gaz arrivant au niveau dudit orifice d'admission est à pression supérieure ou égale à la pression atmosphérique.
- de même, la dépressurisation de la chambre de pressurisation, notamment par ouverture de celle-ci et mise à la pression atmosphérique, permet de rester au dit état d'ouverture sans apport d'énergie autre que celui nécessaire précédemment à cette dépressurisation, notamment pour l'ouverture d'un dit orifice de la chambre de pressurisation, et

Lorsque le diaphragme est en dite position d'obturation desdits orifice d'admission et orifice d'évacuation, ladite chambre de pressurisation s'étend de manière à englober le volume de ladite deuxième chambre de circulation, laquelle n'existe plus ou disparaît lorsque le diaphragme est en dite position d'obturation.

Lorsqu'une vanne selon l'invention est utilisée à titre de vanne CPR, il est possible de relier les éventuels différents orifices d'admission de la vanne à des orifices d'évacuation de compartiments de matelas gonflés d'air à des pressions différentes, chaque orifice d'admission de la vanne pouvant être relié à tous les compartiments gonflés à une même pression. Ainsi, il est possible de mettre en oeuvre une unique vanne CPR par un matelas comportant plusieurs zones de compartiments gonflés à des pressions différentes, sous réserve que le nombre de dits orifices d'admission de la vanne soit au moins égal au nombre de zones de compartiments gonflés à des pressions différentes.

On comprend que ladite chambre de pressurisation comprend au moins un orifice coopérant avec un moyen d'injection d'air comprimé et des moyens de fermeture/ouverture de ladite chambre de pressurisation permettant le remplissage de gaz, notamment d'air dans ladite chambre et le maintien de pressurisation après remplissage d'air ou la vidange de ladite chambre de pressurisation par ouverture et mise à la pression atmosphérique d'un dit orifice de ladite chambre de pressurisation.

Toutefois, de préférence, ledit premier moyen de fermeture/ouverture dudit orifice de mise en pression est un clapet anti-retour à fonctionnement automatique, fonctionnant sans apport d'énergie extérieure autre que la pression du gaz injecté dans ledit orifice de pressurisation, de préférence un clapet anti-retour mécanique, comprenant un moyen élastique tel qu'un ressort, ledit clapet, de préférence ledit moyen élastique étant apte à :
- maintenir en position d'ouverture ledit premier moyen de fermeture/ouverture dudit orifice de mise en pression tant que la chambre de pressurisation est à une pression inférieure ou égale à la pression de ladite chambre de circulation, et
- maintenir en position de fermeture ledit premier moyen de fermeture/ouverture dudit orifice de mise en pression tant que l'on n'y injecte pas d'air comprimé à une pression supérieure à la pression de l'air dans ladite chambre de pressurisation.

En pratique, on envoie de l'air par un mini compresseur ou par le compresseur principal du matelas à une pression de 5 à 10 fois supérieure à la pression maximale autorisée dans les compartiments d'un dit matelas sur lequel lesdits orifices d'admission de ladite vanne sont branchés, le cas échéant, soit environ 100 à 500 mbar, correspondant à la pression maximale possible de ladite chambre de circulation.

Avantageusement encore, ledit deuxième moyen de fermeture/ouverture dudit orifice de dépressurisation est un robinet de purge à commande mécanique manuelle, coopérant avec ledit orifice de dépressurisation, de préférence à l'extrémité d'un tuyau assurant la liaison entre ledit robinet de purge et ledit orifice de dépressurisation.

Ce robinet de purge, raccordé à la vanne par un tuyau pouvant atteindre plusieurs mètres, peut ainsi être positionné loin de ladite vanne, à l'endroit le plus accessible pour le personnel médical.

Lorsque ledit premier moyen de fermeture/ouverture dudit orifice de mise en pression est un clapet anti-retour à fonctionnement mécanique tel que décrit ci-dessus et que ledit deuxième moyen de fermeture/ouverture dudit orifice de dépressurisation est un robinet de purge à commande mécanique manuelle, tel que décrit ci-dessus, la chambre de pressurisation peut rester en pression et ladite vanne selon l'invention en dit état d'obturation, bien que le compresseur d'injection d'air dans ladite chambre de pressurisation soit à l'arrêt.

Lesdits premier moyen de fermeture/ouverture et deuxième moyen de fermeture/ouverture peuvent être maintenus en position fermée et sans apport d'énergie extérieure. Et, pour obtenir une vanne en dit état d'ouverture, il suffit d'actionner manuellement ledit robinet de purge à commande mécanique manuelle, permettant de mettre ladite chambre de pressurisation en communication avec l'air extérieur et à la pression atmosphérique.

Dans un mode de réalisation préféré, la vanne à commande pneumatique et réserve d'énergie selon l'invention comprend :
- un premier corps, dit corps de pilotage, et un deuxième corps, dit corps de circulation, ledit diaphragme étant intercalé et bloqué à sa périphérie entre les deux premier et deuxième corps,
- ledit premier corps comprenant une forme creuse délimitant une partie de la paroi de ladite chambre de dépressurisation, ledit premier corps étant perforé par desdits orifice de mise en pression et orifice de dépressurisation, et
- ledit deuxième corps de circulation présentant une surface de forme concave tournée vers le diaphragme à l'intérieur de la vanne et ledit deuxième corps étant perforé par desdits orifice d'admission et orifice d'évacuation.

On comprend que :
- lesdits orifice de mise en pression et orifice de dépressurisation débouchent dans ladite chambre de pressurisation d'un côté, et à l'extérieur de la vanne de l'autre côté, et
- lesdits orifice d'admission et orifice d'évacuation dudit deuxième corps débouchent sur ladite surface concave d'un côté et vers l'extérieur de la vanne de l'autre côté.

La profondeur de la surface concave est déterminée pour qu'un passage suffisant soit possible dans ladite chambre de circulation entre ledit diaphragme en position de repos et lesdits orifices d'admission et d'évacuation.

Plus particulièrement, si les deux corps formant la vanne sont à section circulaire, le diaphragme est une rondelle.

Avantageusement, lorsque ledit diaphragme est en position d'ouverture, la surface de la section minimale de passage entre lesdits orifice d'admission et orifice d'évacuation à l'intérieur de ladite chambre de circulation, est au moins égale à la surface cumulée des sections desdits orifices d'admission, celle-ci étant elle-même inférieure ou égale à la surface cumulée des sections desdits orifices d'évacuation.

Ceci permet qu'aucune restriction ne vienne freiner l'évacuation de l'air.

De préférence encore, les différents orifices d'admission et d'évacuation sont séparés l'un de l'autre par la surface pleine de ladite surface concave et la distance entre deux orifices les plus proches l'un de l'autre, est au moins égale à la moitié du diamètre du plus grand dit orifice d'admission et/ou d'évacuation.

Cette caractéristique vise à offrir une surface d'appui suffisante pour une bonne adhérence du diaphragme en position d'obturation.

Dans un mode de réalisation particulier et avantageux, lesdits orifice d'admission et orifice d'évacuation sont des orifices cylindriques débouchant sur ladite surface concave formant de préférence une surface de calotte sphérique partielle et lesdits orifice d'admission et orifice d'évacuation de la vanne sont disposés en couronne et en alternance, symétriquement par rapport à l'axe de symétrie de ladite surface concave.

Le diaphragme est constitué en matière plastique à faible rémanence de sorte qu'il revienne à sa géométrie initiale lorsque la chambre de pressurisation revient à la pression atmosphérique même après un très long temps de déformation.

On peut améliorer les propriétés de déformation du diaphragme en le préformant de manière à ce que sa course de déformation soit réduite tout en maintenant un passage d'air suffisant. Il peut aussi être envisagé de nervurer le diaphragme pour qu'il revienne plus aisément à sa position de repos tout en présentant une déformation adéquate.

Plus particulièrement encore, le diaphragme a été réalisé en matériau plastique élastique, de préférence en caoutchouc, d'épaisseur inférieure ou égale à 2 millimètres.

De préférence encore, une vanne selon l'invention comprend une pluralité de préférence au moins trois orifices d'admission et une pluralité de préférence au moins trois orifices d'évacuation.

Cette configuration permet d'obtenir un écoulement de l'air optimal tout en préservant une surface de contact du diaphragme contre ledit deuxième corps optimal pour assurer une parfaite étanchéité entre la chambre de pressurisation et la chambre de circulation.

Ce type de vanne à commande pneumatique comprenant une pluralité d'orifices d'admission et une pluralité d'orifices d'évacuation est particulièrement utile pour réaliser une vanne de dégonflage total et rapide dite « CPR » comme il sera explicité ci-après.

Dans un autre mode de réalisation, une vanne à commande pneumatique selon l'invention comprend :
- un unique orifice d'admission, et
- un unique orifice d'évacuation.

Ce type de vanne est plus particulièrement utile pour faire office de vanne d'alimentation en air desdits compartiments et/ou vannes d'évacuation d'air desdits compartiments gonflés d'air comme il sera explicité ci-après.

Dans ce dernier type d'application, une vanne selon l'invention est caractérisée en ce que :
- ledit premier moyen de fermeture/ouverture dudit orifice de mise en pression est un clapet anti-retour fonctionnant mécaniquement sans apport d'énergie tel que défini selon l'invention ou une mini électrovanne coopérant avec ledit orifice de mise en pression, et
- ledit deuxième moyen de fermeture/ouverture dudit orifice de dépressurisation est une mini électrovanne coopérant avec ledit orifice de dépressurisation.

On entend ici par « électrovanne » des vannes fonctionnant avec apport d'énergie électrique permettant la commande des états de fermeture et ouverture de ladite vanne et le maintien desdits états d'ouverture ou fermeture de ladite vanne.

Comme mentionnée précédemment, la présente invention a également pour objet un dispositif de support, en particulier du corps d'un individu, du type matelas, comprenant une pluralité de n compartiments, de préférence au moins trois compartiments, de préférence encore trois à vingt-quatre compartiments, aptes à être gonflés d'un fluide, en particulier d'un gaz, plus particulièrement encore gonflés d'air, lesdits compartiments comprenant chacun au moins un orifice d'alimentation, et un orifice d'évacuation de fluide, et, au moins une vanne d'alimentation permettant de commander l'alimentation en fluide desdits compartiments, et au moins une vanne d'évacuation permettant d'évacuer le fluide desdits compartiments, chaque vanne d'alimentation coopérant avec au moins un dit orifice d'alimentation de compartiments et, chaque vanne d'évacuation coopérant avec au moins un dit orifice d'évacuation de compartiment, caractérisé en ce qu'il comprend au moins une vanne à commande pneumatique et réserve d'énergie selon l'invention telle que définie ci-dessus.

Dans un premier mode de réalisation, le dispositif de support comprend au moins une vanne selon l'invention comprenant une pluralité d'orifices d'admission et une pluralité d'orifices d'évacuation à titre de vanne de dégonflage total et rapide dite vanne CPR, dont :
- chaque dit orifice d'admission est relié à des orifices d'évacuation desdits compartiments d'une même zone dans lesquels les différents compartiments sont gonflés à la même pression, les différents orifices d'admission étant reliés à des orifices d'évacuation de compartiments ou tuyaux d'évacuation respectivement de différentes zones dans lesquelles les alimentations et évacuations de gaz des compartiments sont commandées par des vannes d'alimentation et vannes d'évacuation différentes, et
- chaque dit orifice d'évacuation de ladite vanne à commande pneumatique communique avec l'air extérieur lorsque ladite vanne à commande pneumatique est en dit état d'ouverture.

On notera que les diamètres des orifices d'admission et orifices d'évacuation de ladite vanne pneumatique sont sensiblement identiques au diamètre interne des tuyaux de liaison standard assurant la liaison entre lesdits orifices d'admission et orifices d'évacuation de la vanne et les tuyaux d'alimentation et d'évacuation de fluide coopérant avec les orifices d'admission et d'évacuation desdits compartiments.

Plus particulièrement, lesdits orifices d'admission de ladite vanne à commande pneumatique et réserve d'énergie sont reliés à des tuyaux d'évacuation entre lesdits orifices d'évacuation de compartiments et lesdites vannes d'évacuation ces dernières étant de préférence des électrovannes insérées dans un bloc de distribution.

Dans un autre mode de réalisation, un dispositif support selon l'invention comprend au moins une vanne à commande pneumatique selon l'invention comprenant un unique orifice d'admission et un unique orifice d'évacuation consistant en :
- une vanne faisant office de vanne d'alimentation d'au moins un compartiment, dont ledit orifice d'admission de la dite vanne est relié à un compresseur principal d'injection d'air comprimé, et dont ledit orifice d'évacuation est relié à au moins orifice d'alimentation de compartiment ou un tuyau d'alimentation coopérant avec un au moins un dit orifice d'alimentation d'au moins un compartiment, et/ou
- une vanne faisant office de vanne d'évacuation d'air desdits compartiments, dont ledit orifice d'admission de ladite vanne pneumatique est relié par l'intermédiaire d'un tuyau à au moins un orifice d'évacuation d'au moins un compartiment, ledit orifice d'évacuation de ladite vanne à commande pneumatique communiquant avec l'air extérieur.

Dans ce mode de réalisation, lesdites vannes d'évacuation peuvent être commandées à distance pour assurer un dégonflage rapide et total dudit matelas, au même titre que les vannes dites CPR.

La présente invention a également pour objet un procédé d'utilisation d'un dispositif de support selon l'invention, caractérisé en ce que :
- pour obtenir une dite position d'obturation de ladite vanne, on envoie de l'air comprimé dans une dite chambre de pressurisation par ledit orifice de mise en pression, dont ledit premier moyen de fermeture/ouverture est en position d'ouverture, ledit deuxième moyen de fermeture/ouverture dudit orifice de dépressurisation étant en position de fermeture, jusqu'à ce que la pression de la chambre de pressurisation soit supérieure à la pression de la chambre de circulation, de façon à déformer ledit diaphragme de manière à obturer lesdits orifice d'admission et orifice d'évacuation, et
- pour obtenir une dite position d'ouverture de ladite vanne, on réalise la vidange de ladite chambre de pressurisation par ouverture dudit deuxième moyen de fermeture:ouverture dudit orifice de dépressurisation, de manière à ce que ledit diaphragme retourne dans sa position de repos dans laquelle le diaphragme sépare ladite première chambre de pressurisation et ladite deuxième chambre de circulation permettant la circulation de gaz entre lesdits orifice d'admission et orifice d'évacuation.

Plus particulièrement, un procédé d'utilisation selon l'invention d'un dispositif support de type matelas dans lequel une dite vanne à commande pneumatique fait office de vanne de dégonflage total et rapide de type CPR, tel que défini ci-dessus,
caractérisé en ce que :
- pour obtenir une dite position d'obturation de la dite vanne à commande pneumatique et réserve d'énergie de type CPR, on envoie de l'air comprimé dans une dite chambre de pressurisation jusqu'à ce que la pression dans ladite chambre de pressurisation soit supérieure à la pression maximale dans lesdits compartiments, de préférence de 100 à 500 mbar, et
- pour obtenir un dégonflage complet et rapide de tous lesdits compartiments dudit matelas, on met en dite position d'ouverture de ladite vanne à commande pneumatique et réserve d'énergie de type CPR.

La mise en oeuvre d'une vanne avec réserve d'énergie selon l'invention, à titre de vanne CPR, est particulièrement intéressante car les vannes CPR doivent, en général, être mises en oeuvre dans des conditions particulières, notamment pendant que l'on déplace le patient alité sur un matelas thérapeutique à cellules gonflées en dehors de sa chambre, c'est-à-dire sans aucune possibilité d'alimentation en air et/ou alimentation en énergie électrique. La vanne CPR selon la présente invention peut être mise en oeuvre en urgence sans apport d'énergie extérieur, sans qu'il soit requis de prévoir une source d'alimentation en énergie de la vanne CPR embarquée avec le matelas, ce qui est particulièrement utile pour ce type de vanne, en particulier lorsque l'on déplace, d'une pièce à une autre, le patient alité sur ledit matelas.

D'autres caractéristiques et avantages de la présente invention apparaîtront plus clairement à la lumière de la description détaillée qui va suivre, faite en référence aux figures 1 à 8, dans lesquelles :
- la figure 1 représente une vue schématique d'un matelas thérapeutique selon l'invention, coopérant avec une vanne de type « CPR » selon l'invention ;
- la figure 2 est une vue d'une vanne à commande pneumatique selon l'invention ;
- les figures 2A et 2B sont des vues schématiques en coupe d'une vanne selon l'invention, en dit état d'ouverture (figure 2A) et dit état d'obturation (figure 2B);
- la figure 2C est une vue en éclaté des différentes pièces constituant une vanne selon l'invention ;
- la figure 3A est une vue en perspective d'un dit deuxième corps ou corps de circulation d'une vanne selon l'invention (vue en perspective, figure 3A et vue de côté, figure 3B ou vue en coupe AA de la figure 3B sur la figure 3C) ;
- les figures 4A et 4B sont des vues d'un diaphragme d'une vanne selon l'invention (au repos (figure 4A) et déformée (figure 4B));
- la figure 5 est une vue en perspective d'un dit premier corps de pilotage à section cylindrique d'une vanne selon l'invention ;
- la figure 6 est une vue en coupe longitudinale schématique d'un clapet anti-retour d'une vanne selon l'invention ;
- les figures 7A, 7B et 7C sont des représentations schématiques d'une vanne, de type « CPR » avant mise en service (figure 7A), en cours de pressurisation de la chambre de pressurisation et déformation dudit diaphragme (7B), en fin de déformation dudit diaphragme en dit état d'obturation (figure 7C), en déclenchement de changement d'état (figure 8A) et en dit état d'ouverture (figure 8B).

Sur la figure 1, on a représenté de façon schématique un matelas 10 comprenant seize compartiments constitués de boudins 11 disposés transversalement à la direction longitudinale du matelas.

Ces seize compartiments sont répartis en trois zones.
- zone de tête Z₃: un compartiment,
- zone de corps Z₂: douze compartiments, et
- zone de pieds Z₁: trois compartiments.

Sur la figure 1, on a représenté un système d'alimentation/évacuation d'air des différents compartiments à partir d'un collecteur comprenant un manifold d'alimentation M₁ comprenant trois électrovannes d'alimentation 13₁ V₁, V₂, V₃ et un manifold d'évacuation M₂ comprenant trois électrovannes d'évacuation 13₂ V₄, V₅ et V₆.

Ce collecteur est combiné à un boîtier de commande électronique non représenté. Le manifold d'alimentation M₁ est relié à une unique pompe/compresseur C₁.

Chaque vanne d'alimentation V₁ à V₃ est connectée à un tuyau principal d'alimentation t₁ à t₃ alimentant une zone de compartiment Z₁ à Z₃.

Symétriquement, chaque vanne d'évacuation V₄ à V₆ est connectée à un tuyau principal d'évacuation t₄ à t₆.

Plus précisément, l'électro-vanne V₁ alimente, à partir du tuyau principal d'alimentation t₁, les trois compartiments de la zone de pieds, le tuyau t₁ comprenant deux raccords en T, à partir de chacun desquels un tuyau secondaire de dérivation t'₁ permet d'assurer la connexion via un embout tubulaire de connexion à un orifice tubulaire d'alimentation 12₁ de chaque compartiment.

Symétriquement, à partir des orifices tubulaires d'évacuation 12₂ desdits compartiments, disposés sur le côté opposé du matelas sont raccordés par des embouts tubulaires de type «cannelé », des tuyaux d'évacuation secondaires t'₄, eux-mêmes raccordés par des raccords en T à un même tuyau principal d'évacuation t₄ connecté à l'électrovanne d'évacuation V₄ du manifold d'évacuation M₂.

Les électrovannes V₂ et V₅ assurent la commande de l'alimentation et, respectivement l'évacuation des douze compartiments de la zone du corps, par l'intermédiaire d'un tuyau principal d'alimentation t₂ et d'un tuyau principal d'évacuation t₅ connectés aux électrovannes d'alimentation V₂ et, respectivement, aux électrovannes d'évacuation V₅ du collecteur.

Les orifices d'alimentation 12₁ des douze compartiments de la zone Z₂ du corps sont connectés au tuyau principal d'alimentation t₂ par l'intermédiaire de tuyaux secondaires d'alimentation t'₂, raccordés par des raccords T au tuyau t₂ et des embouts tubulaires non représentés aux orifices tubulaires d'alimentation 12₁.

Symétriquement, des tuyaux secondaires d'évacuation t'₅ assurent la connexion entre les orifices tubulaires d'évacuation 12₂ auxquels ils sont reliés par des embouts tubulaires non représentés, à une extrémité et, à l'autre extrémité, au tuyau principal d'évacuation t₅ à l'aide du raccord T.

Enfin, les électrovannes d'alimentation V₃ et électrovannes d'évacuation V₆ assurent la commande de l'alimentation, respectivement l'évacuation du compartiment unique de la zone de tête par l'intermédiaire d'un tuyau principal d'alimentation t₃ et d'un tuyau principal d'évacuation t₆ auxquels il sont respectivement reliés.

Ce réseau de liaison pneumatique entre les manifolds et les différents compartiments du matelas sur la figure 1, fonctionne en dit mode à pressions continues car tous les compartiments de chaque zone sont alimentés et/ou évacués de manière identique, la seule modulation possible étant entre les différentes zones à partir des trois couples d'électrovannes d'alimentation/électrovannes d'évacuation.

Sur la figure 1, on a représenté une vanne de dégonflage rapide de type CPR à commande pneumatique selon l'invention 1.

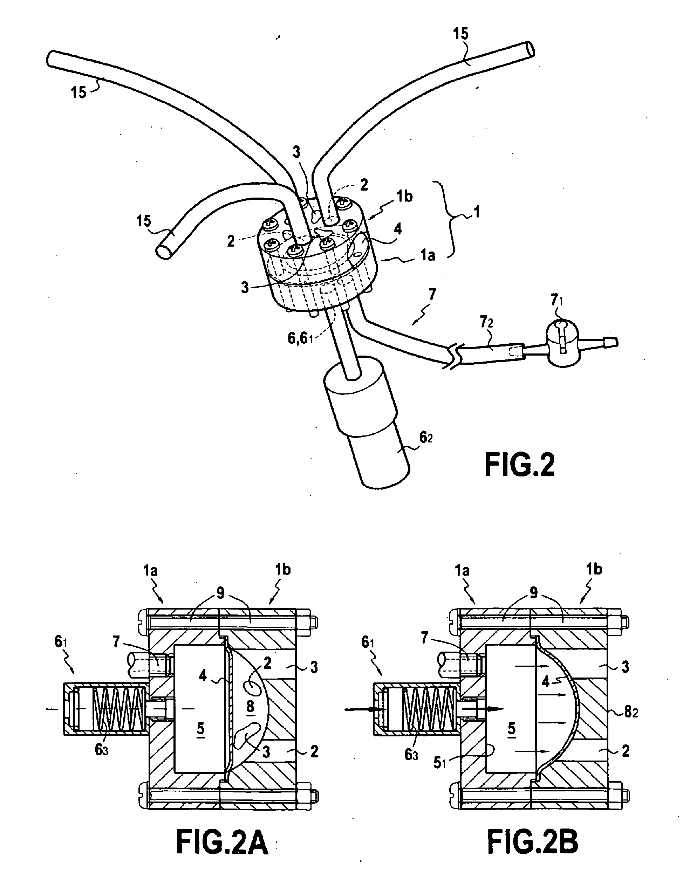

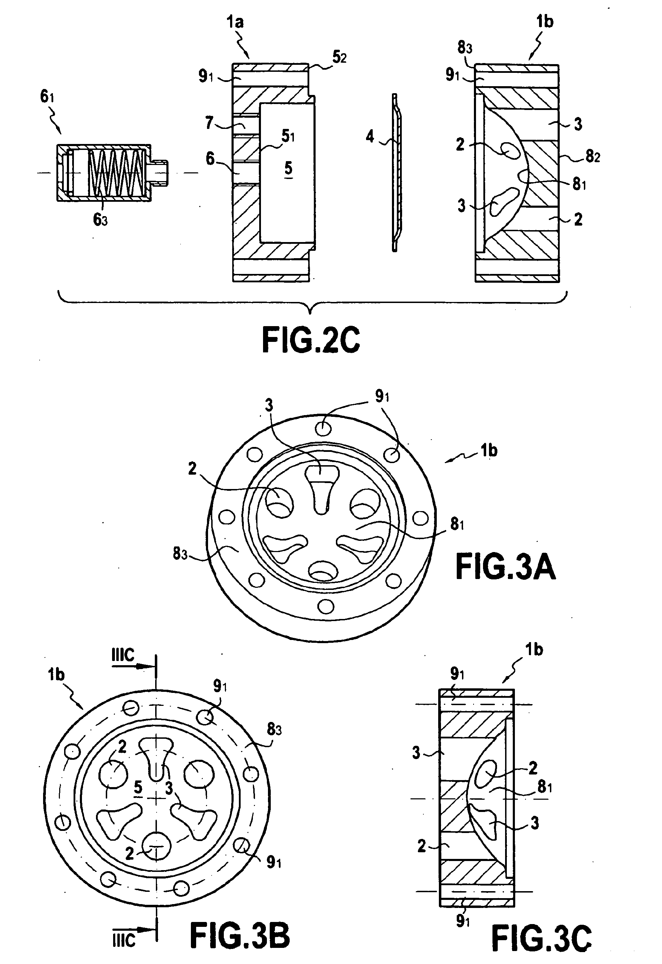

Sur les figures 2 à 3, on a représenté une vanne à commande pneumatique et réserve d'énergie, comportant trois dits orifices d'admission et trois dits orifices d'évacuation, chacun desdits orifices d'admission 2 étant relié à un tuyau 15 en dérivation des tuyaux d'évacuation t₄, t₅ et t₆ des trois zones Z₁, Z₂ et respectivement Z₃ comportant des compartiments 11 à pressions différentes.

Lesdits orifices d'admission 2 de la vanne présentent un diamètre sensiblement identique au diamètre des tubes d'évacuation standard 15 et t₄, t₅ et t₆.

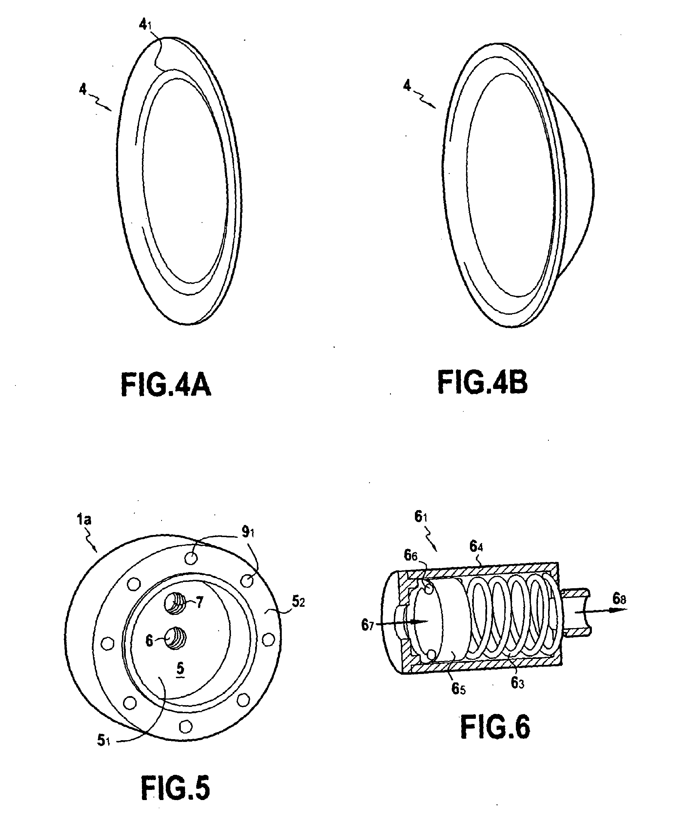

Une vanne à commande pneumatique, selon l'invention, comprend un premier corps 1a, dit corps de pilotage, tel que représenté sur la figure 5, définissant une chambre cylindrique creuse 5 ou dite chambre de pressurisation 5 comportant un fond plein 5₁ dans lequel sont réalisés les deux orifices suivants :
- un orifice de mise en pression 6,
- un orifice de dépressurisation 7.
L'orifice de mise en pression 6 coopère avec un clapet anti-retour 6₁, lui-même intercalé entre ledit orifice de mise en pression 6 et un mini compresseur 6₂.

Ledit orifice de dépressurisation 7 coopère avec un tuyau 2 à l'autre extrémité duquel est monté un robinet de purge 7₁ qui permet, par ouverture mécanique, de dépressuriser la chambre de pressurisation, le cas échéant.

Ce robinet de purge 7₁ raccordé à la vanne 1 par un tube 7₂ pouvant atteindre plusieurs mètres, peut ainsi être positionné à l'endroit le plus accessible pour le personnel médical, afin de vider l'air des compartiments des différentes zones du matelas par ouverture dudit robinet de purge, comme il sera explicité ci-après.

Sur la figure 2B, on a représenté une variante dans lequel les moyens de fermeture/ouverture de l'orifice de dépressurisation 7 est constituée par une mini électrovanne (non représentée), laquelle peut être commandée à distance par activation électrique de façon connue de l'homme de l'art.

Ledit premier corps de pilotage 1a, délimitant ladite chambre de pressurisation 5, comporte une face ouverte dont le bord de la paroi périphérique cylindrique 5₂ coopère avec le bord périphérique du diaphragme 4 en forme de rondelle, en matière plastique élastique, de type caoutchouc de 1 à 2 mm d'épaisseur à faible rémanence.

Un diaphragme en matériau élastique en forme de rondelle de caoutchouc 4 est intercalé entre ledit premier corps de pilotage 1a et un deuxième corps de circulation 1b à section circulaire. Ledit deuxième corps 1b est apte à venir se fixer contre ledit premier corps 1a à l'aide de vis 9 coopérant dans des perforations cylindriques périphériques 9₁, lesquelles coïncident dans chacun desdits premier et deuxième corps 1a et 1b.

Ces deux premier et deuxième corps 1a et 1b doivent présenter des surfaces 5₂ et 8₃ de contact l'un avec l'autre, parfaitement rectifiés de façon à presser les bords du diaphragme 4 contre la surface périphérique 5₂ et 8₃, de chacun desdits premier et deuxième corps, ceci pour assurer une parfaite étanchéité.

L'écrasement de la périphérie du diaphragme entre le premier et le deuxième corps est assuré par les vis 9 passant à travers les perforations cylindriques 9₁ réparties de manière à répartir l'effort sans vriller lesdits corps et le diaphragme.

Lorsque le diaphragme 4 est en position de repos, c'est-à-dire non déformé, coincé entre les deux premiers corps 1a et deuxièmes corps 1b, il sépare une dite chambre de pressurisation 5 à l'intérieur dudit premier corps 1a et une dite chambre de circulation 8 à l'intérieur dudit deuxième corps 1b.

La surface 8₁ dudit deuxième corps 1b tournée du côté du premier corps 1a présente une forme concave en forme de calotte sphérique définissant la chambre de circulation 8 entre ladite surface concave 8₁ et ledit diaphragme 4.

La surface concave 8₁ du deuxième corps de circulation 1b comporte trois dits orifices d'admission 2 à section circulaire et trois dits orifices d'évacuation 3 disposés alternativement et en couronne par rapport aux orifices d'admission 2.

La surface pleine de ladite surface concave 8₁ représente plus de 50 % des surfaces perforées correspondant aux dits orifice d'admission 2 et orifice d'évacuation 3.

Les orifices d'admission 2 ont un diamètre de 4 à 8 mm et la distance entre un orifice d'admission et chacun des orifices d'évacuation adjacents est supérieure au diamètre dudit orifice d'admission.

D'autre part, la surface de la section transversale des orifices d'évacuation 3 cylindriques est supérieure à la section circulaire des orifices d'admission cylindriques 2.

Comme représenté sur la figure 2B, la forme hémisphérique de la surface concave interne 8₁ (figure 2C) dudit deuxième corps 1b permet que le diaphragme 4, lorsqu'il est déformé par mise en pression de la chambre de pressurisation 5, vienne se plaquer sur toute ladite surface concave 8₁ et, ainsi, obturer à la fois lesdits orifices d'admission 2 et orifices d'évacuation 3 de la vanne.

Les orifices d'évacuation 3 présentent une section non circulaire car ils débouchent directement à l'air libre sur la face 8₂ dudit deuxième corps de circulation 1b opposée à la face 8₁ présentant une face concave hémisphérique délimitant ladite chambre de circulation 8.

La forme de la surface concave hémisphérique 8₁ dudit deuxième corps 1b, la taille, la forme et la répartition desdits orifice d'admission 2 et d'évacuation 3 permettent d'obtenir le meilleur écoulement de l'air possible, en préservant une surface de contact du diaphragme 4 sur la surface concave du corps 1b assurant une parfaite étanchéité de la chambre de pressurisation 5 par une obturation parfaite desdits orifice d'admission 2 et orifices d'évacuation 3.

La profondeur de ladite surface concave hémisphérique correspond sensiblement à 1/6^{ème} du diamètre du diaphragme 4, de sorte que, lorsque ledit diaphragme est en position de repos tel que représenté sur la figure 2A, la section de passage en tout point à l'intérieur de la chambre de circulation 8 est supérieure à la surface cumulée des sections des orifices d'admission 2, cette dernière étant en outre inférieure ou égale à la surface cumulée des sections des orifices d'évacuation 3.

Les dimensions du corps 1b sont déterminées par le nombre et les diamètres des orifices d'admission 2 et orifices d'évacuation 3 de la vanne.

Sur les figures 4A et 4B, le diaphragme comporte une nervure périphérique 4₁ laquelle facilite le retour, en position de repos de la rondelle (figure 4A) après déformation selon la figure 4B.

Sur la figure 6, on a représenté un mode de réalisation d'un clapet anti-retour 6₁ adaptable sur l'orifice de mise en pression 6 dudit premier corps 1a, à titre de moyens d'ouverture/fermeture dudit orifice. Ce clapet anti-retour fonctionne automatiquement et sans apport d'énergie. Il comporte un ressort 6₃ qui permet de :
- maintenir en position d'ouverture ledit orifice de mise en pression 6 tant que la chambre de pressurisation est à une pression inférieure à la pression de ladite chambre de circulation et inférieure ou égale à la pression de ladite chambre de circulation 8, et
- maintenir en position de fermeture ledit orifice de mise en pression 6 tant que l'on n'injecte pas d'air comprimé à une pression supérieure à la pression de l'air dans la dite chambre de pressurisation 5.

Ce clapet anti-retour 6₁ présente un corps creux cylindrique 6₄ comprenant un piston 6₅, plaqué contre un joint torique 6₆ de par l'action d'expansion d'un ressort 6₃ assurant la fermeture du clapet et donc de l'orifice 6.

Ce corps creux cylindrique 6₄ présente des rainures longitudinales sur sa surface interne, aptes à laisser passer de l'air en dépit du piston 6₅ lorsque celui-ci n'est plus poussé par le ressort 6₃ contre le joint torique 6₆.

L'air 6₇ provenant d'un mini compresseur 6₂ (non représenté figure 6) vient pousser le piston 6₅, lequel comprime le ressort 6₃ et dégage le piston 6₅ du joint torique 6₆, ce qui permet ainsi le passage de l'air à travers ledit corps 6₄ le long des rainures longitudinales à la surface interne du corps 6₄ (non représentées) pour sortir en 6₈ à l'intérieur dudit orifice de mise en pression 6 en direction de la chambre de pressurisation 5.

En pratique, l'air venant du mini compresseur 6₂ est envoyé à une pression de 100 à 500 mbar, de façon à pousser le piston 6₅ et traverser le corps cylindrique creux 6₄ pour sortir dans ladite chambre de pressurisation 5 afin de pousser le diaphragme 4.

Quand une pression donnée de 100 à 500 mbar est atteinte à l'intérieur de la chambre de pressurisation 5, ledit diaphragme 4 est plaqué contre la surface concave hémisphérique, obturant ainsi lesdits orifices d'admission 2 et orifices d'évacuation 3. Le mini compresseur 6₂ est alors arrêté et le piston 6₅ revient dans sa position initiale par l'effet du ressort 6₃ et de la pression à l'intérieur de la chambre de pressurisation 5, assurant ainsi la fermeture du clapet 6₁ et donc l'étanchéité de ladite chambre de pressurisation 5. Ce clapet anti-retour maintient ainsi la pression à l'intérieur de la chambre de pressurisation 5 dans la mesure où le robinet de purge 7₁ est en position fermée.

Lorsque la vanne à commande pneumatique 1, selon l'invention, se trouve en état d'obturation telle que représentée figure 2B, les différents orifices d'admission 2 reliés par des tuyaux 15 aux différents tuyaux d'évacuation t₄, t₅, t₆ assurant l'évacuation des compartiments 11 des différentes zones Z₁, Z₂, Z₃, respectivement depuis leurs orifices d'évacuation 12₂, sont obturés et la vanne 1, selon l'invention, faisant office de vanne « CPR » empêche la vidange de l'air contenu dans les différents compartiments 11.

Il est nécessaire de prévoir une pluralité d'orifices d'admission, un pour chaque zone de boudins à une pression donnée, et non pas un unique orifice d'admission, pour éviter que les différentes zones communiquent entre elles au niveau d'un T de liaison, ce qui empêcherait de maintenir les différentes zones à différentes pressions.

Pour activer le dégonflage total et rapide de l'air des différents compartiments 11, on ouvre manuellement le robinet à ouverture mécanique 7₁ faisant office de moyens de fermeture/ouverture dudit orifice de dépressurisation 7, ce qui a pour effet de placer la chambre de pressurisation 5 à la pression atmosphérique, de sorte que le diaphragme 4 qui, sur sa face opposée du côté de la chambre de circulation 8, est soumis à une pression correspondant à la pression interne de gonflage des compartiments 11 communiquant avec les différents orifices d'admission 2, se trouve déformée jusqu'à revenir en une dite position de repos droite, telle que représentée sur la figure 2A.

Ainsi, l'air contenu dans les compartiments 11 peut circuler depuis lesdits orifices d'admission 2 qui sont maintenant ouverts, puis, passer à l'intérieur de ladite chambre de circulation 8 et sortir par lesdits orifices d'évacuation 3 débouchant à l'air libre.

La vanne « CPR », selon l'invention, permet donc un grand débit d'évacuation de l'air contenu dans les boudins 11 et le déclenchement dit « état d'ouverture» de la vanne dans lesquels le diaphragme est dégagé desdits orifices d'admission 2 et orifice d'évacuation 3 pour adopter la position de repos figure 2A, se déclenche sans aucune alimentation en énergie électrique, de par la seule réserve d'énergie qu'elle renferme sous forme pneumatique.

C'est cette réserve d'énergie pneumatique qui permet le maintien en dite position d'obturation du diaphragme sans aucune alimentation énergétique, notamment en électricité.

En pratique, le diaphragme présente un diamètre de 30 millimètres qui se déplace selon son axe XX sur une distance de déplacement de 4 à 5 millimètres.

On prévoit un volume de chambre de pressurisation 5 suffisamment grand pour amortir les éventuelles petites fuites au niveau du contact diaphragme/premier corps de pilotage 1a et deuxième corps de circulation 1b.

En pratique, le volume de la chambre de pressurisation 5 sera d'au moins 5 cm³, de préférence au moins 10 cm³, de préférence encore au moins de 50 cm³, soit au moins deux fois le volume entre les diaphragmes au repos et la surface interne concave hémisphérique dudit corps 1b délimitant la chambre de circulation 8, de préférence au moins quatre fois, de préférence encore au moins 10 fois.

Le diaphragme est réalisé en un matériau synthétique élastique, tel qu'un caoutchouc de chambre à air de vélo, ayant une épaisseur au moins 0.5 millimètre.

Les autres pièces de la vanne sont réalisées en matériau plastique rigide.

En théorie, on pourrait prévoir un unique orifice d'échappement, mais d'un point de vue pratique, notamment pour avoir une bonne assise ou adhérence du diaphragme sur le corps d'évacuation et, pour avoir une évacuation optimale, on préfère mettre en oeuvre une pluralité d'orifices d'échappement.

L'orifice de dépressurisation 7 de la chambre de pressurisation 5, au lieu de coopérer avec un tuyau 7₂ et un robinet de purge 7₁ à ouverture mécanique, peut coopérer avec une mini électrovanne (non représentée) coopérant avec ledit orifice de dépressurisation 7.

De même, à la place du clapet anti-retour 6₁ coopérant avec l'orifice de mise en pression 6, on peut placer une mini électrovanne coopérant avec l'orifice de mise en pression 6.

Ce type de mini électrovanne, connu de l'homme de l'art, présente l'avantage de n'utiliser de l'énergie électrique que pour leur changement d'état entre une position d'ouverture permettant la circulation d'air à travers l'électrovanne et une position de fermeture empêchant la circulation d'air vers ladite mini électrovanne et donc à travers ledit orifice en cause.

Ces mini électrovannes sont stables et ne nécessitent pas d'énergie pour être maintenues dans un état d'ouverture ou état de fermeture.

En conséquence, seul le changement d'un dit état d'ouverture (figure 2A) et un dit état d'obturation (figure 2B), requiert de l'énergie électrique contrairement aux électrovannes classiques qui requièrent de l'énergie électrique extérieure d'alimentation pour être maintenues dans un état donné d'ouverture ou de fermeture.

On peut également utiliser une vanne pneumatique à réserve d'énergie selon la présente invention à titre de vanne d'alimentation 13₁ ou vanne d'évacuation 13₂, dans le manifold de bloc de distribution 14 d'alimentation/évacuation en air des différents compartiments 11 du matelas, tel que représenté sur la figure 1.

Dans ce cas, on pourra mettre en oeuvre des vannes comportant un unique orifice d'admission 2 et un unique orifice d'évacuation 3.

Pour les vannes d'admission 13₁ à commande pneumatique et réserve d'énergie, l'orifice d'admission 2 sera en communication avec le compresseur principal d'alimentation Ci tandis que l'orifice d'évacuation débouchera sur les tuyaux t₁, t₂ ou t₃ respectivement pour chacune des vannes alimentant des zones de compartiments Z₁, Z₂ et Z₃ pouvant être gonflées à des pressions différentes.

Symétriquement, les vannes d'évacuation 13₂, V₄, V₅ et V₆ peuvent également être constituées de vannes à commande pneumatique 1 selon l'invention comportant un unique orifice d'évacuation 3 débouchant à l'air libre du côté du bloc manifold M₂ et un unique orifice d'admission 2 débouchant sur lesdits tuyaux d'évacuation t₄, t₅ et t₆ respectivement pour chacune des vannes V₄, V₅ et V₆ recevant l'air des compartiments des zones Z₁, Z₂ et Z₃.

Les vannes à commande pneumatique 13₁ en dit état d'ouverture permettront le gonflage desdits compartiments 11 par injection d'air provenant du compresseur Ci.

Lorsque l'on arrête de gonfler les compartiments 11, on arrête l'injection d'air dans ledit orifice d'admission 2. Le diaphragme 4 se déforme et vient se plaquer contre lesdits orifice d'admission 2 et orifice d'évacuation 3, par le fait que la pression interne à l'intérieur de la chambre de pressurisation 5 est maintenue supérieur à la pression qui s'applique sur la face opposée du diaphragme, à savoir la pression intérieure desdits compartiments 11, lesquels communiquent avec le corps creux 1b par l'intermédiaire des orifices d'évacuation 3. La vanne à commande pneumatique 13₁ est ainsi dans un dit état d'obturation.

Inversement, lesdites vannes d'évacuation à commande pneumatique V₄ à V₆ sont en dit état d'obturation lorsque leur chambre de pressurisation est à une pression supérieure à la pression interne à la pression interne des compartiments 11 qui communique avec lesdits orifices d'admission 2.

Lorsque l'on ouvre ledit moyen d'ouverture/fermeture 7₁ à l'intérieur dudit orifice de dépressurisation 7, on déclenche le retour en position de repos du diaphragme 4 selon la figure 2A, ce qui permet de réaliser le vidage de l'air des compartiments reliés aux dites vannes d'évacuation V₄ à V₆ à commande pneumatique.

Les vannes à commande pneumatique et réserve d'énergie 1 selon la présente invention telles que décrites ci-dessus, ne requièrent de l'énergie que pour la mise sous pression de ladite chambre de pressurisation 5 pendant un court instant.

Cette chambre 5 n'étant que de 5 cm3, un mini compresseur 6₂ d'une puissance de 1,4 W et d'un débit de 300 cm³/minute fonctionnant pendant moins d'une seconde et suffisant pour porter la pression à l'intérieur de la chambre à une valeur de 500 mbar.

Les avantages additionnels de cette vanne à commande pneumatique sont:
- d'obtenir un temps d'évacuation de l'air des compartiments 11 très rapides, dans la mesure où il est possible de mettre en adéquation le diamètre des sections desdits orifices d'admission et orifices d'évacuation avec les diamètres des tuyaux d'évacuation t₄ à t₆;
- de mettre en oeuvre une unique vanne de type CPR au lieu d'une vanne CPR pour chaque zone Z1, Z3 de compartiment, ce qui représente une réduction de coût, d'encombrement, de poids et de bruits de fonctionnement ;
- l'incidence de fonctionnement d'une vanne à commande pneumatique selon l'invention comporte moins de nuisance que les vannes à électro-aimant (électrovannes) qui changent d'état, induisent un bruit de claquement lors de leur changement d'état entre eux, état d'ouverture et état de fermeture ;
- enfin, une vanne à commande pneumatique selon l'invention peut faire également office de clapet de suppression dans le cas où la pression d'un compartiment serait à la limite de la pression/destruction du compartiment, suite à une défaillance technique.

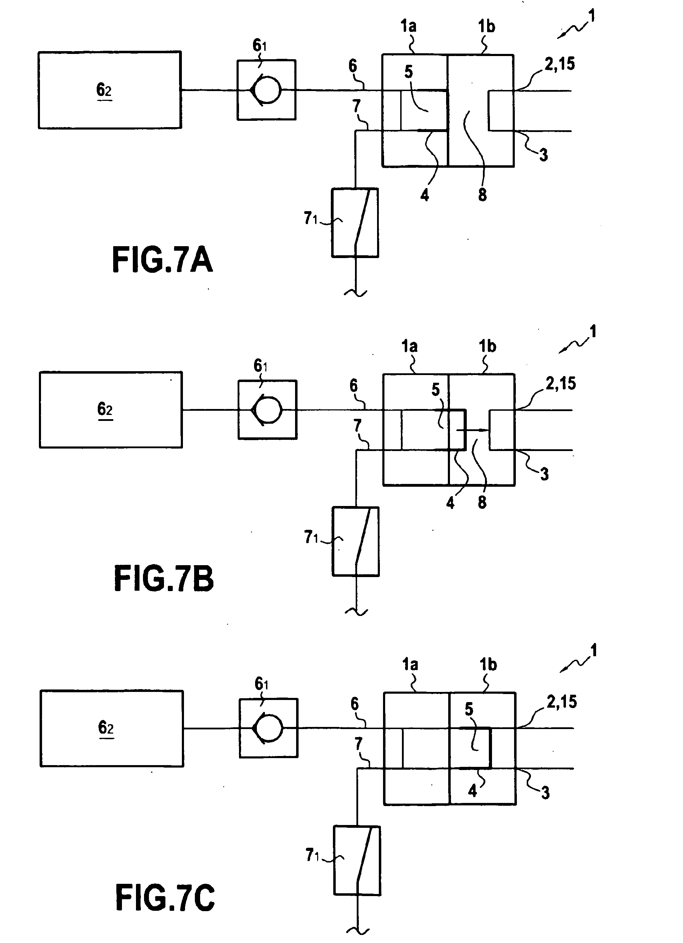

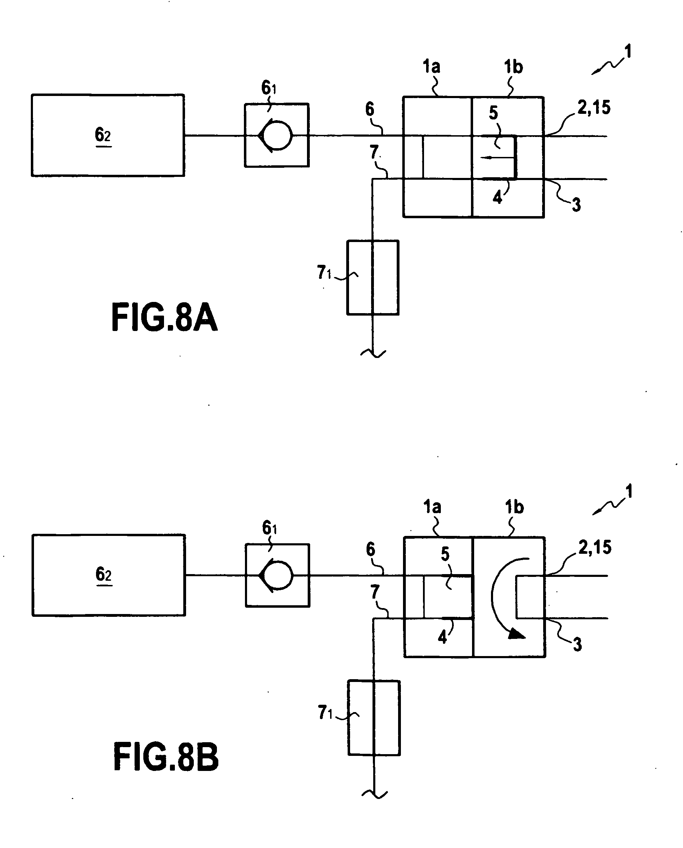

Sur les figures 7A à 7C et 8A-8B, on a schématisé la position des différents éléments d'une vanne selon l'invention à ses différents états.

Sur la figure 7A, la vanne CPR est représentée avant mise en service : le clapet anti-retour 6₁ est en position fermée, le diaphragme 5 est en position de repos et la vanne de vidange 7₁ est en position fermée.

Sur la figure 7B, on déclenche la mise en service de la vanne CPR par la mise en marche du mini compresseur 6₂ qui a pour effet d'ouvrir le clapet anti-retour 6₁ permettant l'alimentation en air et la pressurisation de ladite chambre de pressurisation 5.

La purge de vidange 7₁ étant fermée, la pression à l'intérieur de la chambre 5 augmente, ce qui a pour effet de la déformer en direction desdits orifices d'admission 2 et orifices d'évacuation 3 jusqu'à un état d'obturation représenté sur la figure 7C, à partir duquel on arrête le mini compresseur 6₂ et le clapet anti-retour 6₁ vient fermer l'orifice de mise en pression 6, permettant de gonfler ou dégonfler, par l'intermédiaire des vannes d'alimentation 13₁ et vannes d'évacuation 13₂, les compartiments 11 du matelas normalement.

Sur la figure 8A, on a déclenché l'ouverture du robinet de vidange 71, permettant de faire baisser la pression dans la chambre de pressurisation 5 et ainsi faire reculer le diaphragme 4 jusqu'à ce qu'il retrouve sa dite position de repos, comme représenté figure 8B, l'air pouvant alors circuler, permet le vidage complet des compartiments 11 du matelas à travers les tuyaux t4-t6 et 15, puis la vanne 1.

## Revendications

1. Vanne à commande pneumatique et réserve d'énergie (1), avec au moins un orifice d'admission de gaz (2) et au moins un orifice d'évacuation de gaz (3) par mise à l'air libre, la commande pneumatique permettant de commander soit un état d'obturation de ladite vanne empêchant la circulation de gaz entre lesdits orifice d'admission (2) et orifice d'évacuation (3), soit un état d'ouverture de ladite vanne permettant la circulation de gaz à travers et entre lesdits orifice d'admission (2) et orifice d'évacuation (3) en position d'ouverture,
- ladite commande pneumatique de changement d'état se faisant par déplacement d'un diaphragme (4), ledit diaphragme établissant une séparation étanche entre, d'une part, lesdits orifice d'admission (2) et orifice d'évacuation (3) et, d'autre part, une première chambre dite chambre de pressurisation (5) ; et
- ledit diaphragme étant apte à se déformer élastiquement entre les deux positions suivantes d'ouverture et d'obturation commandant des états d'ouverture et respectivement d'obturation de ladite vanne :
. une position d'obturation dans laquelle ladite chambre de pressurisation (5) est pressurisée par injection de gaz, de préférence d'air, le diaphragme étant déformé élastiquement de manière à venir obturer lesdits orifice d'admission (2) et orifice d'évacuation (3), et
. une position d'ouverture, dans laquelle ladite chambre de pressurisation (5) est dépressurisée, ledit diaphragme retournant dans sa position de repos dans laquelle le diaphragme sépare ladite première chambre (5) et une deuxième chambre dite chambre de circulation (8) permettant la circulation de gaz à travers et entre lesdits orifice d'admission (2) et orifice d'évacuation (3) à l'intérieur de ladite vanne (1),
la vanne étant **caractérisée en ce que** ladite chambre de pressurisation (5) comprend un orifice de mise en pression (6) coopérant avec un premier moyen de fermeture/ouverture dudit orifice de mise en pression (6₁) et un compresseur (6₂) apte à injecter un gaz, de préférence de l'air, sous pression dans ledit orifice de mise en pression (6), et un orifice de dépressurisation (7) par mise à la pression atmosphérique de ladite première chambre (5), coopérant avec un deuxième moyen de fermeture/ouverture dudit orifice de dépressurisation (7₁) ;
- le diaphragme étant apte à :
. rester dans une dite position d'obturation de ladite vanne, sans injection de gaz dans ledit orifice de mise en pression, quand ladite chambre de pressurisation est à une pression supérieure à ladite chambre de circulation (8) et que lesdits premier et deuxième moyens de fermeture/ouverture desdits orifices (6, 7) restent en position fermée, et
. passer d'une dite position d'obturation à une dite position d'ouverture de ladite vanne et rester dans une dite position d'ouverture de ladite vanne quand ledit deuxième moyen de fermeture/ouverture dudit orifice de dépressurisation est ouvert, et
. passer d'une dite position d'ouverture à une dite position d'obturation de ladite vanne par fermeture dudit deuxième moyen de fermeture/ouverture de l'orifice de dépressurisation et ouverture dudit premier moyen de fermeture/ouverture dudit orifice de pressurisation, puis injection de gaz dans ledit orifice de pressurisation jusqu'à ce que ladite chambre de pressurisation (5) soit à une pression supérieure à la pression de ladite chambre de circulation (8).

2. Vanne à commande pneumatique et réserve d'énergie (1) selon la revendication 1, **caractérisée en ce que** ledit premier moyen de fermeture/ouverture (6₁) dudit orifice de mise en pression (6) est un clapet anti-retour à fonctionnement automatique, fonctionnant sans apport d'énergie extérieure autre que la pression du gaz injecté dans ledit orifice de pressurisation, de préférence un clapet anti-retour mécanique, comprenant un moyen élastique (6₃) tel qu'un ressort, ledit clapet, de préférence ledit moyen élastique étant apte à :
- maintenir en position d'ouverture ledit premier moyen de fermeture/ouverture dudit orifice de mise en pression (6₁) tant que la chambre de pressurisation est à une pression inférieure ou égale à la pression de ladite chambre de circulation (8), et
- maintenir en position de fermeture ledit premier moyen de fermeture/ouverture dudit orifice de mise en pression (6₁) tant que l'on n'y injecte pas d'air comprimé à une pression supérieure à la pression de l'air dans ladite chambre de pressurisation (5).

3. Vanne à commande pneumatique et réserve d'énergie (1) selon l'une des revendications 1 ou 2, **caractérisée en ce que** ledit deuxième moyen de fermeture/ouverture (7₁) dudit orifice de dépressurisation (7) est un robinet de purge à commande mécanique manuelle, coopérant avec ledit orifice de dépressurisation, de préférence à l'extrémité d'un tuyau (7₂) assurant la liaison entre ledit robinet de purge (7₁) et ledit orifice de dépressurisation (7).

4. Vanne à commande pneumatique et réserve d'énergie (1) selon l'une des revendication 1 à 3, **caractérisée en ce que** :
- elle comprend un premier corps (1a), dit corps de pilotage, et un deuxième corps (1b), dit corps de circulation, ledit diaphragme (4) étant intercalé et bloqué à sa périphérie entre les deux premier et deuxième corps,
- ledit premier corps (1a) comprenant une forme creuse délimitant une partie de la paroi de ladite chambre de pressurisation (5), ledit premier corps étant perforé par desdits orifice de mise en pression (6) et orifice de dépressurisation (7), et
- ledit deuxième corps de circulation (1b) présentant une surface de forme concave (8₁) tournée vers le diaphragme à l'intérieur de la vanne et ledit deuxième corps étant perforé par desdits orifice d'admission (2) et orifice d'évacuation (3).

5. Vanne à commande pneumatique et réserve d'énergie (1) selon l'une des revendication 1 à 4, **caractérisée en ce que**, lorsque ledit diaphragme est en position d'ouverture, la surface de la section minimale de passage entre lesdits orifice d'admission (2) et orifice d'évacuation (3) à l'intérieur de ladite chambre de circulation est au moins égale à la surface cumulée des sections desdits orifices d'admission, celle-ci étant elle-même inférieure ou égale à la surface cumulée des sections desdits orifices d'évacuation.

6. Vanne à commande pneumatique et réserve d'énergie (1) selon l'une des revendications 1 à 5, **caractérisée en ce que** les différents orifices d'admission (2) et d'évacuation (3) sont séparés l'un de l'autre par la surface pleine de ladite surface concave et la distance entre deux orifices les plus proches l'un de l'autre, est au moins égale à la moitié du diamètre du plus grand dit orifice d'admission et/ou d'évacuation.

7. Vanne à commande pneumatique et réserve d'énergie (1) selon l'une des revendications 1 à 6, **caractérisée en ce que** lesdits orifice d'admission (2) et orifice d'évacuation (3) sont des orifices de préférence cylindriques débouchant sur ladite surface concave (8₁) formant de préférence une surface de calotte sphérique partielle et lesdits orifice d'admission (2) et orifice d'évacuation (3) de la vanne sont disposés en couronne et en alternance, symétriquement par rapport à l'axe de symétrie de ladite surface concave.

8. Vanne à commande pneumatique et réserve d'énergie (1) selon l'une des revendications 1 à 7, **caractérisée en ce que** le diaphragme a été réalisé en matériau plastique élastique, de préférence en caoutchouc, d'épaisseur inférieure ou égale à 2 millimètres.

9. Vanne à commande pneumatique et réserve d'énergie (1) selon l'une des revendications 1 à 8, **caractérisée en ce qu'**elle comprend une pluralité de préférence au moins trois orifices d'admission (2) et une pluralité, de préférence encore au moins trois orifices d'évacuation (3).

10. Vanne à commande pneumatique et réserve d'énergie (1) selon l'une des revendications 1 à 8, **caractérisée en ce qu'**elle comprend :
- un unique orifice d'admission (2), et
- un unique orifice d'évacuation (3).

11. Vanne à commande pneumatique et réserve d'énergie (1) selon la revendication 10, **caractérisée en ce que** :
- ledit premier moyen de fermeture/ouverture dudit orifice de mise en pression (6₁) est un clapet anti-retour fonctionnant mécaniquement sans apport d'énergie tel que défini dans la revendication 3 ou une mini électrovanne coopérant avec ledit orifice de mise en pression (6), et
- ledit deuxième moyen de fermeture/ouverture dudit orifice de dépressurisation (7₁) est une mini électrovanne coopérant avec ledit orifice de dépressurisation.

12. Dispositif de support, en particulier du corps d'un individu, du type matelas (10), comprenant une pluralité de n compartiments (11), de préférence au moins trois compartiments, de préférence encore trois à vingt-quatre compartiments, aptes à être gonflés d'un fluide, en particulier d'un gaz, plus particulièrement encore gonflés d'air, lesdits compartiments comprenant chacun au moins un orifice d'alimentation (12₁), et un orifice d'évacuation de fluide (12₂), et, au moins une vanne d'alimentation (13₁) permettant de commander l'alimentation en fluide desdits compartiments, et au moins une vanne d'évacuation (13₂) permettant d'évacuer le fluide desdits compartiments, chaque vanne d'alimentation coopérant avec au moins un dit orifice d'alimentation de compartiment et, chaque vanne d'évacuation coopérant avec au moins un dit orifice d'évacuation de compartiment, **caractérisé en ce qu'**il comprend au moins une vanne à commande pneumatique et réserve d'énergie (1) selon l'une des revendications 1 à 11.

13. Dispositif de support selon la revendication 12, **caractérisé en ce qu'**il comprend au moins une vanne selon la revendication 9, à titre de vanne de dégonflage total et rapide dite vanne CPR, dont :
- chaque dit orifice d'admission (2) est relié à des orifices d'évacuation (12₂) desdits compartiments (11) d'une même zone dans lesquels les différents compartiments (11) sont gonflés à la même pression, les différents orifices d'admission (2) étant reliés à des orifices d'évacuation de compartiments (12₂) ou tuyaux d'évacuation (t₄-t₆) respectivement de différentes zones (z₁), (z₂), (z₃) dans lesquelles les alimentations et évacuations de gaz des compartiments sont commandées par des vannes d'alimentation (13₁) et vannes d'évacuation (13₂) différentes, et
- chaque dit orifice d'évacuation (3) de ladite vanne à commande pneumatique communique avec l'air extérieur lorsque ladite vanne à commande pneumatique est en dit état d'ouverture.

14. Dispositif de support selon la revendication 13, **caractérisé en ce que** lesdits orifices d'admission (2) de ladite vanne à commande pneumatique et réserve d'énergie (1) sont reliés à des tuyaux d'évacuation (t₄-t₆) entre lesdits orifices d'évacuation de compartiments (12₂) et lesdites vannes d'évacuation (13₂), ces dernières étant de préférence des électrovannes insérées dans un bloc de distribution (14).

15. Dispositif selon la revendication 12, **caractérisé en ce qu'**il comprend au moins une vanne à commande pneumatique selon la revendication 10 ou 11, comprenant un unique orifice d'admission (2) et unique orifice d'évacuation (3) consistant en :
- une vanne faisant office de vanne d'alimentation (13₁) d'au moins un compartiment (11), dont ledit orifice d'admission (2) de la dite vanne est relié à un compresseur principal d'injection d'air comprimé, et dont ledit orifice d'évacuation (3) est relié à au moins un orifice d'alimentation (12₁) de compartiment ou un tuyau d'alimentation (t₁-t₃) coopérant avec au moins un dit orifice d'alimentation d'au moins un compartiment, et/ou
- une vanne faisant office de vanne d'évacuation d'air (13₂) desdits compartiments (11), dont ledit orifice d'admission (2) de ladite vanne pneumatique est relié par l'intermédiaire d'un tuyau (t₄-t₆) à au moins un orifice d'évacuation (12₂) d'au moins un compartiment (11), ledit orifice d'évacuation (3) de ladite vanne à commande pneumatique communiquant avec l'air extérieur.

16. Procédé d'utilisation d'un dispositif de support selon l'une des revendications 12 à 15, **caractérisé en ce que** :
- pour obtenir une dite position d'obturation de ladite vanne, on envoie de l'air comprimé dans une dite chambre de pressurisation par ledit orifice de mise en pression, dont ledit premier moyen de fermeture/ouverture (6₁) est en position d'ouverture, ledit deuxième moyen de fermeture/ouverture dudit orifice de dépressurisation étant en position de fermeture, jusqu'à ce que la pression de la chambre de pressurisation (5) soit supérieure à la pression de la chambre de circulation (8), de façon à déformer ledit diaphragme de manière à obturer lesdits orifice d'admission et orifice d'évacuation (3), et
- pour obtenir une dite position d'ouverture de ladite vanne, on réalise la vidange de ladite chambre de pressurisation par ouverture dudit deuxième moyen de fermeture:ouverture dudit orifice de dépressurisation (7), de manière à ce que ledit diaphragme retourne dans sa position de repos dans laquelle le diaphragme sépare ladite première chambre de pressurisation (5) et ladite deuxième chambre de circulation permettant la circulation de gaz entre lesdits orifice d'admission (2) et orifice d'évacuation (3).

17. Procédé d'utilisation selon la revendication 16, d'un dispositif support de type matelas dans lequel une dite vanne à commande pneumatique fait office de vanne de dégonflage total et rapide de type CPR, tel que défini dans l'une des revendications 13 ou 14, **caractérisé en ce que** :
- pour obtenir une dite position d'obturation de la dite vanne à commande pneumatique et réserve d'énergie (1) de type CPR, on envoie de l'air comprimé dans une dite chambre de pressurisation jusqu'à ce que la pression dans ladite chambre de pressurisation soit supérieure à la pression maximale dans lesdits compartiments, de préférence de 100 à 500 mbar, et
- pour obtenir un dégonflage complet et rapide de tous lesdits compartiments dudit matelas, on met en dite position d'ouverture ladite vanne à commande pneumatique et réserve d'énergie (1) de type CPR.

## Claims

1. A pneumatic control valve with power reserve (1), with at least one gas admission orifice (2) and at least one gas discharge orifice (3) for placing in open air, the pneumatic control allowing control of either a closed state of said valve preventing circulation of gas between said admission orifice (2) and discharge orifice (3), or an open state of said valve allowing circulation of gas via and between said admission orifice (2) and discharge orifice (3) in an open position,
- said pneumatic control of change of state occurring by moving a diaphragm (4), said diaphragm establishing tight separation between, on the one hand, said admission orifice (2) and discharge orifice (3) and, on the other hand, a first chamber known as a pressurisation chamber (5); and
- said diaphragm being suitable for deforming elastically between the following two open and closed positions controlling said open and respectively closed states of said valve:
. a closed position in which said pressurisation chamber (5) is pressurised by injection of gas, preferably air, the diaphragm being deformed elastically so as to block off said admission orifice (2) and discharge orifice (3), and
. an open position, in which said pressurisation chamber (5) is depressurised, said diaphragm returning to its rest position in which the diaphragm separates said first chamber (5) and a second chamber known as a circulation chamber (8) allowing circulation of gas via and between said admission orifice (2) and discharge orifice (3) inside said valve (1), and
the said valve being **characterised in that** said pressurisation chamber (5) comprises a pressurising orifice (6) cooperating with first closing/opening means of said pressurising orifice (6₁) and a compressor (6₂) for injecting gas, preferably air, under pressure into said pressurising orifice (6), and a depressurisation orifice (7) by placing said first chamber (5) at atmospheric pressure, cooperating with second closing/opening means of said depressurisation orifice (7₁),
- the diaphragm being suitable for:
. remaining in a said closed position of said valve, without injection of gas into said pressurising orifice, when said pressurisation chamber is at a pressure greater than said circulation chamber (8) and when said first and second closing/opening means of said orifices (6, 7) remain in a closed position, and
. moving from a said closed position to a said open position of said valve and remaining in a said open position of said valve when said second closing/opening means of said depressurisation orifice are open, and
. moving from a said open position to a said closed position of said valve by closing of said second closing/opening means of the depressurisation orifice and opening of said first closing/opening means of said pressurisation orifice, then injection of gas in said pressurisation orifice until said pressurisation chamber (5) is at a pressure greater than the pressure of said circulation chamber (8).

2. The pneumatic control valve with power reserve (1) according to claim 1, **characterised in that** said first closing/opening means (6₁) of said pressurising orifice (6) is an automatic non-return valve, functioning without external power supply other than the pressure of the gas injected into said pressurisation orifice, preferably a mechanical non-return valve, comprising elastic means (6₃) such as a spring, said non-return valve, preferably said elastic means being suitable for:
- keeping in an open position said first closing/opening means of said pressurising orifice (6₁) while the pressurisation chamber is at a pressure less than or equal to the pressure of said circulation chamber (8), and
- keeping in a closed position said first closing/opening means of said pressurising orifice (6₁) while no compressed air is injected at a pressure greater than the pressure of the air into said pressurisation chamber (5).

3. The pneumatic control valve with power reserve (1) according to any of claims 1 or 2, **characterised in that** said second closing/opening means (7₁) of said depressurisation orifice (7) are a mechanical manual drain cock with control, cooperating with said depressurisation orifice, preferably at the end of a pipe (7₂) ensuring a bond between said drain cock (7₁) and said depressurisation orifice (7).

4. The pneumatic control valve with power reserve (1) according to any of claims 1 to 3, **characterised in that**:
- it comprises a first body (1a), said control body, and a second body (1b), said circulation body, said diaphragm (4) being inserted and blocked at its periphery between the two first and second bodies,
- said first body (1a) comprising a hollow form delimiting part of the wall of said pressurisation chamber (5), said first body being perforated by said pressurising orifice (6) and depressurisation orifice (7), and
- said second circulation body (1b) having a surface of concave shape (8₁) turned towards the said diaphragm inside the valve and said second body being perforated by said admission orifice (2) and discharge orifice (3).

5. The pneumatic control valve with power reserve (1) according to any of claims 1 to 4, **characterised in that**, when said diaphragm is in an open position, the minimal surface of the section of passage between said admission orifice (2) and discharge orifice (3) inside said circulation chamber is at least equal to the full surface of the sections of said admission orifices, the latter itself being less than or equal to the total surface of the sections of said discharge orifices.

6. The pneumatic control valve with power reserve (1) according to any of claims 1 to 5, **characterised in that** the different admission (2) and discharge (3) orifices are separated from one another by the full surface of said concave surface and the distance between two orifices closest to one another is at least equal to half the diameter of the largest admission and/or discharge orifice.

7. The pneumatic control valve with power reserve(1) according to any of Claims 1 to 6, **characterised in that** said admission orifice (2) and discharge orifice (3) are preferably cylindrical orifices terminating on said concave surface (8₁) preferably forming a partial spherical cap surface and said admission orifice (2) and discharge orifice (3) of the valve are placed in a crown and alternately, symmetrically relative to the axis of symmetry of said concave surface.

8. The pneumatic control valve with power reserve (1) according to any of claims 1 to 7, **characterised in that** the said diaphragm is made of elastic plastic material, preferably rubber, of a thickness less than or equal to 2 millimetres.

9. The pneumatic control valve with power reserve(1) according to any of claims 1 to 8, **characterised in that** it comprises a plurality of preferably at least three admission orifices (2) and a plurality of preferably at least three discharge orifices (3).

10. The pneumatic control valve with power reserve(1) according to any of claims 1 to 8, **characterised in that** it comprises:
- a single admission orifice (2), and
- a single discharge orifice (3).

11. The pneumatic control valve with power reserve(1) according to claim 10, **characterised in that**:
- said first closing/opening means of said pressurising orifice (6₁) is a non-return valve functioning mechanically without power supply such as defined in Claim 3 or a mini electrovalve cooperating with said pressurising orifice (6), and
- said second closing/opening means of said depressurisation orifice (7₁) is a mini electrovalve cooperating inside said depressurisation orifice.

12. A support device, in particular of the body of an individual, of the mattress (10) type, comprising a plurality of n compartments (11), preferably at least three compartments, preferably again three to twenty-four compartments, suitable for being inflated with a fluid, in particular gas, more particularly still inflated with air, each of said compartments comprising at least one supply orifice (12₁), and one fluid discharge orifice (12₂), and, at least one supply valve (13₁) for controlling the supply of fluid from said compartments, and at least one discharge valve (13₂) for evacuating the fluid from said compartments, each supply valve cooperating with at least one said compartment supply orifice and, each discharge valve cooperating with at least one said compartment discharge orifice, **characterised in that** it comprises at least one pneumatic control valve with power reserve (1) according to any of claims 1 to 11.

13. The support device according to Claim 12, **characterised in that** it comprises at least one valve according to claim 9, by way of a total and rapid deflation valve so-called CPR valve, whereof:
- each said admission orifice (2) is connected to discharge orifices (12₂) of said compartments (11) of the same zone in which the different compartments (11) are inflated at the same pressure, the different admission orifices (2) being connected to compartment discharge orifices (12₂) or discharge pipes (t₄-t₆) respectively of different zones (z₁), (z₂), (z₃) in which the supply and discharge of gas from the compartments are controlled by different supply valves (13₁) and discharge valves (13₂), and
- each said discharge orifice (3) of said pneumatic control valve communicates with the external air when said pneumatic control valve is in said open state.

14. The support device according to claim 13, **characterised in that** said admission orifices (2) of said pneumatic control valve with power reserve (1) are connected to discharge pipes (t₄-t₆) between said compartment discharge orifices (12₂) and said discharge valves (13₂), the latter preferably being electrovalves inserted into a distribution block (14).

15. The device according to claim 12, **characterised in that** it comprises at least one pneumatic control valve according to claim 10 or 11, comprising a single admission orifice (2) and single discharge orifice (3) consisting of:
- a valve providing a supply valve (13₁) of at least one compartment (11), whereof said admission orifice (2) of said valve is connected to a main compressor for injection of compressed air, and whereof said discharge orifice (3) is connected to at least one compartment supply orifice (12₁) or a supply pipe (t₁-t₃) cooperating with at least one said supply orifice of at least one compartment, and/or
- a valve providing an air discharge valve (13₂) of said compartments (11), whereof said admission orifice (2) of said pneumatic valve is connected by means of a pipe (t₄-t₆) to at least one discharge orifice (12₂) of at least one compartment (11), said discharge orifice (3) of said pneumatic control valve communicating with the external air.

16. A process for use of a support device according to any of claims 12 to 15, **characterised in that**:
- to obtain a said closed position of said valve, compressed air is sent to a said pressurisation chamber by said pressurising orifice, whereof said first closing/opening means (6₁) is in an open position, said second closing/opening means of said depressurisation orifice being in a closed position, until the pressure of the pressurisation chamber (5) is greater than the pressure of the circulation chamber (8), so as to deform said diaphragm in order to close off said admission orifice and discharge orifice (3), and
- to obtain a said open position of said valve, said pressurisation chamber is emptied by opening said second closing/opening means of said depressurisation orifice (7), so that said diaphragm returns to its rest position in which the diaphragm separates said first pressurisation chamber (5) and said second circulation chamber allowing circulation of gas between said admission orifice (2) and discharge orifice (3).

17. The process of use according to claim 16 of a support device of mattress type in which a said pneumatic control valve provides a total and rapid deflation valve of CPR type, such as defined in any one of claims 13 or 14, **characterised in that**:
- to obtain a said closed position of the said pneumatic control valve with power reserve(1) of CPR type, compressed air is sent to a said pressurisation chamber until the pressure in said pressurisation chamber is greater than the maximum pressure in said compartments, preferably from 100 to 500 mbar, and
- to obtain complete and rapid deflation of all said compartments of said mattress, said pneumatic control valve with power reserve (1) of CPR type are placed in a said open position.

## Patentansprüche

1. Pneumatisch gesteuertes Ventil mit Energiereserve (1), mit wenigstens einer Gaseinlaßöffnung (2) und wenigstens einer Öffnung zum Ablassen des Gases (3) durch Entlüftung, wobei die pneumatische Steuerung ermöglicht, folgendes zu steuern, nämlich entweder einen Zustand zum Schließen des Ventils, wodurch die Gaszirkulation zwischen der Einlaßöffnung (2) und der Ablaßöffnung (3) unterbunden wird, oder einen Zustand zum Öffnen des Ventils, wodurch die Gaszirkulation durch die und zwischen den Einlaß- (2) und Ablaßöffnungen (3) in geöffneter Stellung zugelassen wird,
- wobei die pneumatische Zustandsänderungssteuerung durch Bewegen einer Drossel (4) erfolgt, wobei die Drossel eine dichte Trennung zwischen einerseits den Einlaß- (2) und Ablaßöffnungen (3) und andererseits einer ersten Kammer, sogenannten Druckkammer (5) herstellt, und
- wobei die Drossel geeignet ist, sich zwischen den beiden folgenden Öffnungs- und Schließstellungen, die einen Öffnungszustand bzw. einen Schließzustand des Ventils steuern, elastisch zu verformen:
■ einer Schließstellung, in der die Druckkammer (5) durch Einleiten von Gas, vorzugsweise Luft, unter Druck gesetzt wird, wobei die Drossel derart elastisch verformt wird, daß sie die Einlaßöffnung (2) und die Ablaßöffnung (3) verschließt, und
■ einer Öffnungsstellung, in der die Druckkammer (5) druckentlastet ist, wobei die Drossel in ihre Ruhestellung zurückkehrt, in der die Drossel die erste Kammer (5) und eine zweite Kammer, sogenannte Zirkulationskammer (8), trennt, wodurch die Gaszirkulation durch die und zwischen den Einlaß- (2) und Ablaßöffnungen (3) innerhalb des Ventils zugelassen wird,
wobei das Ventil **dadurch gekennzeichnet ist, daß** die Druckkammer (5) folgendes umfaßt, nämlich eine Druckbeaufschlagungsöffnung (6), die mit einem ersten Mittel zum Schließen/Öffnen der Druckbeaufschlagungsöffnung (6₁) und einem Verdichter (6₂) zusammenwirkt, der geeignet ist, ein Gas, vorzugsweise Luft, unter Druck in die Druckbeaufschlagungsöffnung (6) einzuleiten, sowie eine Öffnung zur Druckentlastung (7) der ersten Kammer (5) durch Bringen auf atmosphärischen Druck, welche mit einem zweiten Mittel zum Schließen/Öffnen der Druckentlastungsöffnung (7₁) zusammenwirkt,
- wobei die Drossel geeignet ist:
- in einer Position zum Schließen des Ventils, ohne Einleiten von Gas in die Druckbeaufschlagungsöffnung zu bleiben, wenn der Druck der Druckkammer höher als der Druck der Zirkulationskammer (8) ist und das erste und das zweite Mittel zum Schließen/Öffnen der Öffnungen (6, 7) in der geschlossenen Position bleiben, und
- von einer Schließposition in eine Position zum Öffnen des Ventils überzugehen und in einer Position zum Öffnen des Ventils zu bleiben, wenn das zweite Mittel zum Schließen/Öffnen der Druckentlastungsöffnung geöffnet ist, und
- von einer Öffnungsposition in eine Position zum Schließen des Ventils überzugehen, und zwar durch Schließen des zweiten Mittels zum Schließen/Öffnen der Druckentlastungsöffnung und Öffnen des ersten Mittels zum Schließen/Öffnen der Druckbeaufschlagungsöffnung, anschließend durch Einleiten von Gas in die Druckbeaufschlagungsöffnung bis der Druck der Druckkammer (5) höher als der Druck der Zirkulationskammer (8) ist.

2. Pneumatisch gesteuertes Ventil mit Energiereserve (1) nach Anspruch 1, **dadurch gekennzeichnet, daß** das erste Mittel zum Schließen/Öffnen (6₁) der Druckbeaufschlagungsöffnung (6) ein Rückschlagventil mit automatischer Funktionsweise, das ohne weitere äußere Energiezufuhr als den Druck des in die Druckbeaufschlagungsöffnung eingeleiteten Gases funktioniert, vorzugsweise ein mechanisches Rückschlagventil ist, das ein Federmittel (6₃), wie eine Feder umfaßt, wobei das Ventil, vorzugsweise das Federmittel geeignet ist:
- das erste Mittel zum Schließen/Öffnen der Druckbeaufschlagungsöffnung (6₁) in der Öffnungsstellung zu halten, solange der Druck der Druckkammer geringer als der oder gleich dem Druck der Zirkulationskammer (8) ist, und
- das erste Mittel zum Schließen/Öffnen der Druckbeaufschlagungsöffnung (6₁) in der Schließstellung zu halten, solange keine Druckluft unter einem Druck oberhalb des Drucks der Luft in der Druckkammer (5) eingeleitet wird.

3. Pneumatisch gesteuertes Ventil mit Energiereserve (1) nach einem der Ansprüche 1 oder 2, **dadurch gekennzeichnet, daß** das zweite Mittel zum Schließen/Öffnen (7₁) der Druckentlastungsöffnung (7) ein Ablaßhahn mit manueller mechanischer Steuerung ist, der mit der Druckentlastungsöffnung zusammenwirkt, vorzugsweise am Ende eines Schlauchs (7₂), der die Verbindung zwischen dem Ablaßhahn (7₁) und der Druckentlastungsöffnung (7) sicherstellt.

4. Pneumatisch gesteuertes Ventil mit Energiereserve (1) nach einem der Ansprüche 1 bis 3, **dadurch gekennzeichnet, daß**:
- es einen ersten Körper (1a), sogenannten Steuerkörper, und einen zweiten Körper (1 b), sogenannten Zirkulationskörper umfaßt, wobei die Drossel (4) zwischen den beiden ersten und zweiten Körpern eingefügt und an ihrem Umfang festgelegt ist,
- wobei der erste Körper (1a) eine Hohlform aufweist, die einen Teil der Wand der Druckkammer (5) begrenzt, wobei der erste Körper von der Druckbeaufschlagungsöffnung (6) und der Druckentlastungsöffnung (7) durchbohrt ist, und
- wobei der zweite Zirkulationskörper (1b) eine konkav geformte Fläche (8₁) aufweist, die der Drossel innerhalb des Ventils zugewandt ist, und wobei der zweite Körper von der Einlaßöffnung (2) und der Ablaßöffnung (3) durchbohrt ist.

5. Pneumatisch gesteuertes Ventil mit Energiereserve (1) nach einem der Ansprüche 1 bis 4, **dadurch gekennzeichnet, daß** wenn die Drossel in der Öffnungsstellung ist, die Fläche des minimalen Durchlaßquerschnitts zwischen der Einlaßöffnung (2) und der Ablaßöffnung (3) innerhalb der Zirkulationskammer wenigstens gleich der kumulierten Fläche der Querschnitte der Einlaßöffnungen ist, wobei diese selbst kleiner als die oder gleich der kumulierten Fläche der Querschnitte der Ablaßöffnungen ist.

6. Pneumatisch gesteuertes Ventil mit Energiereserve (1) nach einem der Ansprüche 1 bis 5, **dadurch gekennzeichnet, daß** die verschiedenen Einlaß- (2) und Ablaßöffnungen (3) durch die volle Fläche der konkaven Fläche voneinander getrennt sind und der Abstand zwischen zwei am nächsten gelegenen Öffnungen wenigstens gleich der Hälfte des Durchmessers der größten Einlaß- und/oder Ablaßöffnung ist.

7. Pneumatisch gesteuertes Ventil mit Energiereserve (1) nach einem der Ansprüche 1 bis 6, **dadurch gekennzeichnet, daß** die Einlaßöffnung (2) und die Ablaßöffnung (3) vorzugsweise zylindrische Öffnungen sind, die in die konkave, vorzugsweise eine teilkugelkappenförmige Fläche bildende Fläche (8₁) münden, und die Einlaß- (2) und Ablaßöffnungen (3) des Ventils kranzförmig und abwechselnd, zur Symmetrieachse der konkaven Fläche symmetrisch angeordnet sind.

8. Pneumatisch gesteuertes Ventil mit Energiereserve (1) nach einem der Ansprüche 1 bis 7, **dadurch gekennzeichnet, daß** die Drossel aus elastischem Kunststoff, vorzugsweise aus Gummi, mit einer Dicke kleiner oder gleich 2 Millimeter gefertigt worden ist.

9. Pneumatisch gesteuertes Ventil mit Energiereserve (1) nach einem der Ansprüche 1 bis 8, **dadurch gekennzeichnet, daß** es eine Vielzahl von, vorzugsweise wenigstens drei Einlaßöffnungen (2) sowie eine Vielzahl von, weiterhin vorzugsweise wenigstens drei Ablaßöffnungen (3) umfaßt.

10. Pneumatisch gesteuertes Ventil mit Energiereserve (1) nach einem der Ansprüche 1 bis 8, **dadurch gekennzeichnet, daß** es folgendes umfaßt:
- eine einzige Einlaßöffnung (2) und
- eine einzige Ablaßöffnung (3).

11. Pneumatisch gesteuertes Ventil mit Energiereserve (1) nach Anspruch 10, **dadurch gekennzeichnet, daß**:
- das erste Mittel zum Schließen/Öffnen der Druckbeaufschlagungsöffnung (6₁) ein ohne Energiezufuhr mechanisch funktionierendes Rückschlagventil ist, wie es in Anspruch 3 definiert ist, oder ein Mini-Elektroventil, das mit der Druckbeaufschlagungsöffnung (6) zusammenwirkt, und
- das zweite Mittel zum Schließen/Öffnen der Druckentlastungsöffnung (7₁) ein Mini-Elektroventil ist, das mit der Druckentlastungsöffnung zusammenwirkt.

12. Stützvorrichtung, insbesondere für den Körper eines Menschen, vom Typ Matratze (10), mit einer Vielzahl von n Zellen (11), vorzugsweise wenigstens drei Zellen, weiterhin vorzugsweise drei bis vierundzwanzig Zellen, die geeignet sind, mit einem Fluid, insbesondere einem Gas, weiterhin insbesondere mit Luft aufgeblasen zu werden, wobei die Zellen jeweils wenigstens eine Versorgungsöffnung (12₁) und eine Fluidablaßöffnung (12₂) aufweisen, sowie mit wenigstens einem Versorgungsventil (13₁), das ermöglicht, die Fluidversorgung der Zellen zu steuern, und wenigstens einem Ablaßventil (13₂), das ermöglicht, das Fluid aus den Zellen abzulassen, wobei jedes Versorgungsventil mit wenigstens einer Zellenversorgungsöffnung und jedes Ablaßventil mit wenigstens einer Zellenentleerungsöffnung zusammenwirkt, **dadurch gekennzeichnet, daß** sie wenigstens ein pneumatisch gesteuertes Ventil mit Energie-Reserve (1) nach einem der Ansprüche 1 bis 11 aufweist.

13. Stützvorrichtung nach Anspruch 12, **dadurch gekennzeichnet, daß** sie wenigstens ein Ventil nach Anspruch 9 als Ventil zum vollständigen und schnellen Entleeren, sogenanntes CPR-Ventil, aufweist, von dem:
- jede Einlaßöffnung (2) mit Ablaßöffnungen (12₂) der Zellen (11) eines gleichen Bereichs verbunden ist, in denen die unterschiedlichen Zellen (11) auf den gleichen Druck aufgeblasen sind, wobei die unterschiedlichen Einlaßöffnungen (2) mit Öffnungen zum Entleeren der Zellen (12₂) bzw. Entleerungsschläuchen (t₄-t₆) unterschiedlicher Bereiche (z₁), (z₂), (z₃) verbunden sind, in denen die Gasversorgungs- und Gasablaßvorgänge der Zellen über unterschiedliche Versorgungsventile (13₁) und Ablaßventile (13₂) gesteuert werden, und
- jede Ablaßöffnung (3) des pneumatisch gesteuerten Ventils mit der Außenluft in Verbindung steht, wenn das pneumatisch gesteuerte Ventil sich im Öffnungszustand befindet.

14. Stützvorrichtung nach Anspruch 13, **dadurch gekennzeichnet, daß** die Einlaßöffnungen (2) des pneumatisch gesteuerten Ventils mit Energie-Reserve (1) mit Entleerungsschläuchen (t₄-t₆) zwischen den Zellenentleerungsöffnungen (12₂) und den Ablaßventilen (13₂) verbunden sind, wobei letztere vorzugsweise in einem Verteilerblock (14) untergebrachte Elektroventile sind.

15. Vorrichtung nach Anspruch 12, **dadurch gekennzeichnet, daß** sie wenigstens ein pneumatisch gesteuertes Ventil nach Anspruch 10 oder 11 mit einer einzigen Einlaßöffnung (2) und einer einzigen Ablaßöffnung (3) aufweist, bestehend aus:
- einem Ventil, das als Ventil zur Versorgung (13₁) wenigstens einer Zelle (11) dient, wobei die Einlaßöffnung (2) des Ventils mit einem Hauptverdichter zum Einleiten von Druckluft verbunden ist und seine Ablaßöffnung (3) mit wenigstens einer Zellenversorgungsöffnung (12₁) oder einem Versorgungsschlauch (t₁-t₃), der mit wenigstens einer Versorgungsöffnung wenigstens einer Zelle zusammenwirkt, verbunden ist, und/oder
- einem Ventil, das als Luftablaßventil (13₂) der Zellen (11) dient, wobei die Einlaßöffnung (2) des pneumatischen Ventils über einen Schlauch (t₄-t₆) mit wenigstens einer Ablaßöffnung (12₂) wenigstens einer Zelle (11) verbunden ist, wobei die Ablaßöffnung (3) des pneumatisch gesteuerten Ventils mit der Außenluft in Verbindung steht.

16. Verfahren zur Verwendung einer Stützvorrichtung nach einem der Ansprüche 12 bis 15, **dadurch gekennzeichnet, daß**:
- für das Erzielen einer Schließstellung des Ventils Druckluft über die Druckbeaufschlagungsöffnung in eine Druckkammer geleitet wird, wobei das erste Schließ-/Öffnungsmittel (6₁) der Druckbeaufschlagungsöffnung sich in der Öffnungsstellung befindet, während das zweite Schließ-/Öffnungsmittel der Druckentlastungsöffnung sich in der Schließstellung befindet, bis der Druck der Druckkammer (5) höher als der Druck der Zirkulationskammer (8) ist, so daß die Drossel verformt wird, um die Einlaßöffnung und Ablaßöffnung (3) zu verschließen, und
- für das Erzielen einer Öffnungsstellung des Ventils das Entleeren der Druckkammer durch Öffnen des zweiten Schließ-/Öffnungsmittels der Druckentlastungsöffnung (7) vollzogen wird, so daß die Drossel in ihre Ruhestellung zurückkehrt, in der die Drossel die erste Druckkammer (5) und die zweite Zirkulationskammer trennt, wodurch die Gaszirkulation zwischen der Einlaßöffnung (2) und der Ablaßöffnung (3) zugelassen wird.

17. Verfahren nach Anspruch 16, zur Verwendung einer Stützvorrichtung vom Typ Matratze, wobei ein pneumatisch gesteuertes Ventil als Ventil zum vollständigen und schnellen Entleeren vom Typ CPR-Ventil dient, wie es in einem der Ansprüche 13 oder 14 definiert ist, **dadurch gekennzeichnet, daß**:
- für das Erzielen einer Schließstellung des pneumatisch gesteuerten Ventils mit Energie-Reserve (1) vom Typ CPR-Ventil Druckluft in eine Druckkammer geleitet wird, bis der Druck in der Druckkammer über dem Maximaldruck in den Zellen liegt, vorzugsweise zwischen 100 und 500 mbar beträgt, und
- zum Erzielen eines vollständigen und schnellen Entleerens aller Zellen der Matratze das pneumatisch gesteuerte Ventil mit Energie-Reserve (1) vom Typ CPR-Ventil in die Öffnungsstellung gebracht wird.
